(19) Europäisches Patentamt
European Patent Office
Office européen des brevets

(11) **EP 1 519 062 A2**

(12) **EUROPEAN PATENT APPLICATION**

(43) Date of publication:
**30.03.2005 Bulletin 2005/13**

(51) Int Cl.⁷: **F16C 33/54**, F16C 33/34,
F16C 33/46

(21) Application number: **04022300.0**

(22) Date of filing: **20.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **24.09.2003 JP 2003331766
30.09.2003 JP 2003341786**

(71) Applicant: **NTN CORPORATION
Osaka-shi Osaka 550-0003 (JP)**

(72) Inventor: **Oishi, Shinji
Itawa-shi Shizuok 438-0037 (JP)**

(74) Representative: **Gassner, Wolfgang, Dr.
Dr. Gassner & Partner
Nägelsbachstrasse 49a
91052 Erlangen (DE)**

(54) **Roller retainer assembly for planetary gear and planetary gear support using the same**

(57)     A combined roller and retainer assembly for a planetary gear mechanism, including a planetary gear and a support shaft for supporting the planetary gear, includes a roller retainer (1) and a plurality of rollers (2) and is adapted to be interposed between the planetary gear and the support shaft for supporting the planetary gear and the support shaft through the rollers (2). The roller retainer (1) includes a pair of annular portions (103, 104) spaced in an axial direction from each other and a plurality of pillars (105) extending between respective outer peripheral edges of the annular portions (103, 104) and spaced in a direction circumferentially of the annular portions (103, 104). The rollers (2) are accommodated within respective pockets (106) each defined between the neighboring pillars (105). One or both of the annular portions (103, 104) are provided with roller retaining pawls (107) of a bent shape in respective portions of inner peripheral portions of the annular portions (103, 104) at a location aligned with the neighboring rollers (2) for constraining the rollers (2) from separating in a direction radially inwardly of the roller retainer (1). The roller retaining pawls (107) are annealed or treated not to be carburized to have a hardness about equal to or lower than the hardness of the roller retainer (1) and equal to or lower than Hv 400.

Fig. 2

EP 1 519 062 A2

**Description**

BACKGROUND OF THE INVENTION

(Field of the Invention)

The present invention relates to a roller/retainer assembly for a planetary gear mechanism, which supports a radial load with a high load bearing capacity, and also to a planetary gear support structure utilizing such roller/retainer assembly.

(Description of the Prior Art)

As is well known to those skilled in the art, a roller/retainer assembly, i.e., a combined roller and retainer assembly, is made up of a plurality of rolling elements or rollers and a roller retainer having a corresponding number of pockets defined therein for rollingly receiving the rollers. The rollers are generally in the form of any of needle rollers, tapered rollers and cylindrical rollers, or balls. When in use, the rollers are held in tangential contact with a cooperating surface of, for example, a housing and, therefore, the roller/retainer assembly has a high load bearing capacity and a high stiffness for a limited space. Accordingly, the roller/retainer assembly is generally considered feasible as a bearing for use under severe conditions such as involving an eccentric rotation or revolution under a high load operating condition and is generally used as a planetary gear bearing for supporting a radial load acting in the planetary reduction gear mechanism.

The roller/retainer assembly is currently available in numerous types such as disclosed in, for example, Japanese Laid-open Patent Publications No. 2003-166540, and No. 2000-179544. In general, in order to increase the load bearing capacity of this type of roller/retainer assembly requires, no way has hitherto been available other than to manufacture the bearing in a bulky size or to render the bearing to be a full type roller model. Increase of the size of the roller/retainer assembly require change in design of a shaft to be supported thereby and/or the housing. On the other hand, the full type roller bearing tends to pose a problem associated with screwing and/or seizure.

In order to alleviate those problems discussed above, attempts have hitherto been made to design the roller retainer to have a shape suitable to accommodate a plurality of rollers within a limited available space so that the load bearing capacity can be remarkably increased without increasing the size of the roller/retainer assembly, such as disclosed in the Japanese Laid-open Patent Publications No. 2003-166540, and No. 2000-179544.

Specifically, the roller/retainer assembly disclosed in the Japanese Laid-open Patent Publication No. 2000-179544 is of a structure, as reproduced in Figs. 35A and 35B of the accompanying drawings, in which the roller retainer 70 has a generally M-sectioned annular configuration and includes an axially intermediate annular wall 71 of a diameter smaller than the pitch circle diameter PCD, outer annular walls 72 on respective sides of the intermediate annular wall 71 with respect to the axial direction of the roller/retainer assembly and each having a diameter larger than the pitch circle diameter PCD, and an annular collar 73 left by bending an outermost end portion of each of the outer annular walls 72 radially inwardly of the roller retainer. The roller retainer 70 has a plurality of circumferentially equidistantly spaced pockets 75 defined therein so as to extend from one outer annular wall 72 to the other outer annular wall 72 via the intermediate annular wall 71 for rollingly accommodating the corresponding rollers 74.

This known roller/retainer assembly makes use of the roller retainer 70 so designed that the collars 73 can prevent separation of the rollers 74 from the roller retainer 70 in a direction radially outwardly thereof and the intermediate annular wall 71 can prevent separation of the rollers 70 in radially inwardly thereof. More specifically, while each of the pockets 75 in the roller retainer 70 is delimited by opposite side edges and opposite end edges all left in the roller retainer 70 by the respective pocket 75 when the latter is formed, engagement pieces 76 protruding respectively from the opposite side edges of the respective pocket in a direction inwardly of the pocket, a distance (width) slightly smaller than the outer diameter of each roller 74, to thereby avoid separation of the corresponding roller 70 in the radially inward direction. When each roller 74 is to be mounted in the corresponding pocket 75, engagement pieces 76 similarly protruding from the opposite side edges of the pocket 75 in a direction inwardly thereof, respectively, are plastically deformed in a direction radially outwardly to allow opposite ends of the associated roller 74 to pass into the pocket 75.

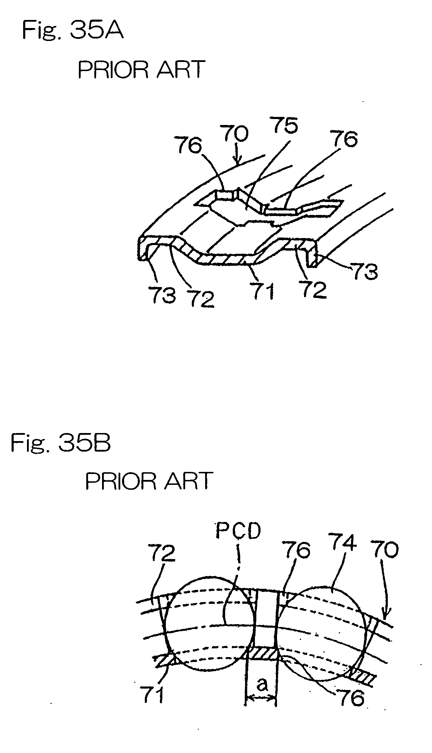

The roller/retainer assembly shown in and described with reference to Figs. 35A and 35B has a capability of preventing the rollers 75 from falling off from the associated pockets 75 in a direction radially outwardly and inwardly. Therefore, the roller retainer 70 and the rollers 74 can be handled as a unitary component, i.e., the roller/retainer assembly, which is, therefore, excellent in handling and transportability prior to incorporation into a machine.

The roller/retainer assembly disclosed in the Japanese Laid-open Patent Publication No. 2003-166540 and reproduced in Figs. 36 to 38 of the accompanying drawings, is made up of a roller retainer 81 including an outer member 83 and an inner member 84 positioned inside the outer member 83 with rollers 82 retained generally between these outer and inner members 83 and 84. The outer member 83 includes an annular wall 83a of a diameter greater than the pitch circle diameter PCD of the circular row of the rollers 82 and opposite annular collars 83b each left by bending an outermost end portion of the annular wall 83a radially inwardly of the annular wall 83a. On the other hand, the inner member 84 represents an annular shape of a diameter smaller than the pitch circle diameter PCD of the circular row of the rollers 82. The annular wall 83a of the outer member 83 and the inner member 84 have circumferentially equidistantly extending pockets 85 and 86 defined therein, respectively, with the rollers 82 sandwiched between the outer and inner members 83 and 84 while rollingly received in part within the pockets 85 and in part within the pockets 86, respectively.

The roller/retainer assembly referred to above is of a two-piece construction and is effective in that each of the pillars left in the annular wall 83a of the outer member 83 by the presence of the neighboring pockets 85 can have a reduced width so that in the assembly as a whole a substantially large number of the rollers 82 can be accommodated within the limited available space. Also, since one of the outer and inner members, specifically the outer member 83 is collared as at 83b, the roller/retainer assembly is substantially from an sliding contact with one or more the neighboring component parts.

Other than those known roller/retainer assemblies discussed above, the Japanese Laid-open Patent Publication No. 2000-220645 discloses the roller/retainer assembly, in which projections formed coaxially with each rollers so as to extend axially from respective opposite ends of the roller in a direction away from each other are engaged with inner annular faces of the retainer collar, and the Japanese Laid-open Patent Publication No. 2000-179544 discloses the roller/retainer assembly, in which the roller retainer is made up of an outer member and an inner member.

However, in the roller/retainer assembly shown Figs. 35A and 35B, if the number of the rollers 74 to be retained by the roller retainer 70 is increased, the pillar left in the roller retainer 70 by the presence of the neighboring pockets 75 would have a width a that is correspondingly reduced, resulting in a limitation imposed on machining and, also, reduction in physical strength of the roller retainer 70.

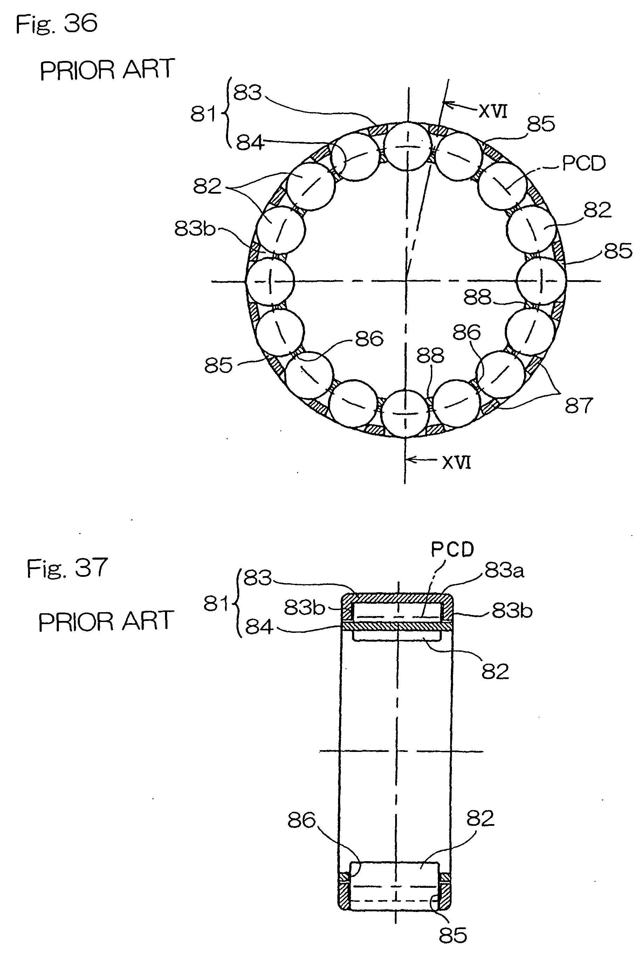

On the other hand, in the case of the roller/retainer assembly shown in and described with reference to Figs. 36 to 38, since the roller retainer 81 is made up of the outer member 83 and the inner member 84 for the prevention of the rollers from separating or falling, the number of component parts used increases, resulting in increase of the cost of manufacture thereof. Also, the presence of the inner member 84 reduces the space available within the bearing, resulting in inconveniences associated with oiling of a lubricant.

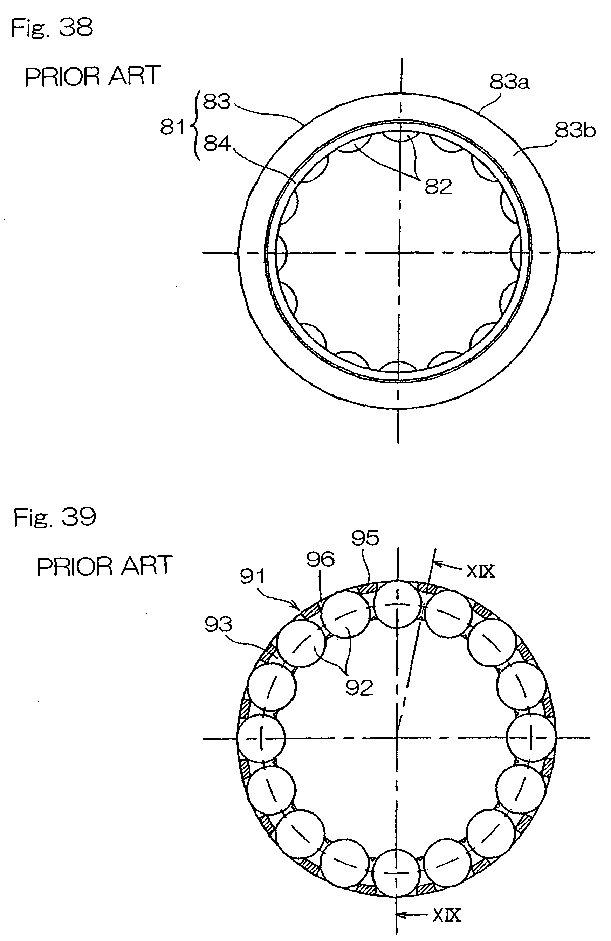

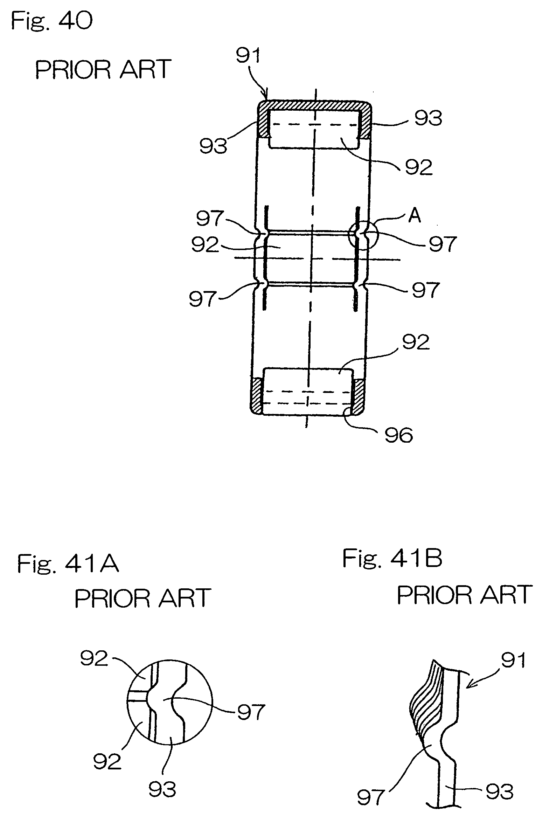

In order to alleviate the foregoing problems, the assignee of the present invention has suggested, in its Japanese Laid-open Patent Publication No. 2004-19923, the structure including a roller retainer 91 and a plurality of rollers 92 as shown in Figs. 39 to 41B of the accompanying drawings. Referring to Figs. 39 to 41B, the roller retainer 91 shown therein has opposite annular end walls 93, spaced apart from each other in a direction axially thereof, and a plurality of circumferentially equidistantly spaced pillars 85 defined therein so as to extend axially from an outer diametric edge of one annular end wall 93 to an outer diametric edge of the other annular end wall 93, with a pocket 96 left between the neighboring pillars 95. As a matter of practice, the rollers 92 are rollingly accommodated within the respective pockets 96 each operatively constrained between the neighboring pillars 95.

In this known roller/retainer assembly, one or both of the annular end walls has an annular inner face formed with a detent means 97 positioned at allocation intermediate between the neighboring rollers 92 for avoiding separation of each roller 92 in a direction radially inwardly thereof. These detent means 97 is in the form of, for example, a protuberance formed by staking.

The roller/retainer assembly of the structure shown in Figs. 39 to 41B appears excellent as compared with that shown in Figs. 36 to 38, in that improvement in oiling and the number of the component parts used can advantageously be dispensed with. It has, however, been found that it is extremely difficult to position a backing member or chisel on one side adjacent the respective inner annular faces of the annular end walls 93 during the formation of the detent means 97, i.e., protuberances and, therefore, the size of that portion of the annular face of each annular end wall 93 that is to be staked to form the corresponding protuberance 97 will not stabilize, resulting the risk of a number of problems associated with the manufacture and the quality of the roller/retainer assembly.

Accordingly, the assignee of the present invention has tried to improve the roller/retainer assembly of the structure shown in Figs. 39 to 41A by replacing the detent means 97 with roller retaining pawls each in the form of a bent piece. The use of the roller retaining pawls each in the form of a bent piece in a bearing different from the roller/retainer assembly, that is, a cylindrical roller bearing including an inner race and an outer race having annular collars is disclosed in, for example, the Laid-open Patent Publication No. 2000-179544.

In order for the roller retaining pawls to be employed in the roller/retainer assembly of a type having neither the inner race nor the outer race and adapted to be installed with the rollers held directly in contact with the shaft and the housing, such as that to which the present invention pertains, the roller retainer is required to be hardened by a heat treatment to cope with the contact of the retained with neighboring component parts. However, a problem has been found that when each of the roller retaining pawls is bent inwardly, when and after the corresponding roller has been placed inside the pocket, to retain the roller in position, some or all of the roller retaining pawls tend to have their

EP 1 519 062 A2

strength degraded or reduced.

Also, when it comes to the use of the roller/retainer assembly in supporting planetary gears of the planetary gear mechanism, the following problems have been found. Specifically, as is well known to those skilled in the art, shafts supporting planetary reduction gears of the planetary gear mechanism, such as, of example, crankshafts undergoes a planetary motion while receiving a high load. When the roller/retainer assembly is used under such a severe operating condition, a metal-to-metal contact between the rollers and the shafts and the housing evolves heat to such an extend as to result in overheating of the rollers. Since the strength and the durability of the rollers are generally low, the overheating of the rollers often results in damage to the roller surface and/or flaking of a surface originating type.

As is well recognized by those skilled in the art, in order to increase the load bearing capacity of the bearing within a limited available space, it is considered feasible to increase the number of the rollers. However, in the case of the roller retainer 70 of the generally M-sectioned configuration as shown in Figs. 35A and 35B, increase of the number of the rollers results in reduction of the transverse width a of each of the pillars defined in the intermediate annular wall 71 between the neighboring pockets and, accordingly, not only is the machinability limited, but the strength of the roller retainer is also reduced. For this reason, the number of the rollers that can be employed in the prior art roller/retainer assembly of the structure shown in and described with reference to Figs. 35A and 35B is generally within the range of 45 to 76%, when expressed in terms of the fill factor of the rollers calculated relative to the total circumference of the roller retainer, and no more fill factor is difficult to achieve.

Accordingly, particularly when the prior art roller/retainer assembly is used as a bearing for a shaft supporting each planetary gear of the planetary gear mechanism, the condition under which it can be utilized severe by reason of the space available for installation of the bearing and the load acting thereon, thus hampering the downsizing of the planetary gear mechanism.

On the other hand, various contrivances have been made to the roller/retainer assembly of a type disclosed in any of the Japanese Laid-open Patent Publications No. 2000-220645 and No. 2000-179544 referred to hereinbefore, but the roller fill factor as defined above have not been clarified.

It is to be noted that the full type roller bearing is known having a maximized load bearing capacity for a given space. However, in a condition in which the full type roller bearing has not yet been incorporated in an equipments, the rollers are apt to separate and fall from the roller retainer. Accordingly, the full type roller bearing has a number of problems all associated with its handling capability, particularly that during assemblage and dismantling, and also with its functionality such as brought about by skewing.

SUMMARY OF THE INVENTION

In view of the foregoing, the present invention has for its object to provide an improved roller/retainer assembly, which can have an increased load bearing capacity within a limited available space and in which an undesirable separation and/or fall of some or all of the rollers in one or both directions radially outwardly and inwardly of the roller retainer does not occur while the roller/retainer assembly has not yet been incorporated in equipments.

Another important object of the present invention is to provide an improved roller/retainer assembly of the type referred to above for use with a planetary gear mechanism, in which exfoliation of some or all of the rollers and shafts can be avoided and overheating of the rollers can also be avoided due to a good oiling capability, and which is easy to machine with no damage occurring during bending of roller retainer pawls.

A further important to object of the present invention is to provide a planetary gear support structure utilizing the improved roller/retainer assembly of the type referred to above.

In order to accomplish the foregoing objects, the present invention in accordance with a first aspect thereof provides a combined roller and retainer assembly for a planetary gear mechanism including a planetary gear and a support shaft for supporting the planetary gear, which assembly is interposed between the planetary gear and the support shaft and wherein rollers are held in rolling contact with the planetary gear and the support shaft, which assembly comprises:

(a) a roller retainer including a pair of annular portions spaced in an axial direction from each other and confronting with each other and a plurality of pillars extending between respective outer peripheral edges of the annular portions and spaced in a direction circumferentially of the annular portions; and
(b) a circular row of rollers accommodated within respective pockets each defined between the neighboring pillars in circumferentially spaced relation to each other and constrained by the pillars from separating in a direction radially outwardly of the roller retainer;
(c) wherein roller retaining pawls of a bent shape are provided in respective portions of inner peripheral portions of the annular portions at a location aligned with the neighboring rollers for constraining the rollers from separating in a direction radially inwardly of the roller retainer; and
(d) wherein the roller retaining pawls are annealed or treated not to be carburized to have a hardness about equal

4

to or lower than the hardness of the roller retainer and equal to or lower than Hv 400.

According to the first aspect of the present invention, since the pillars of the roller retainer and the roller retaining pawls play respective roles to avoid separation of the rollers in directions radially outwardly and inwardly, respectively, the pillars can have a simplified shape and can be positioned at a location closer to the outer periphery with the spacing between the neighboring rollers reduced consequently. Hence, the number of the rollers that can be employed for a given space can be increased to allow the roller/retainer assembly to exhibit a large load bearing capacity. Separation of the rollers in a direction radially inwardly is achieved by the roller retaining pawls formed in the annular portions of the roller retainer, the roller retainer can be of one-piece construction with the number of the component parts reduced consequently, resulting in reduction of the cost of manufacture.

Also, since the roller retaining pawls are formed respectively in the annular portions of the roller retainer, they can be formed locally in respective portions of the annular portions in an axial direction thereof and this is in contrast to the pillars. For this reason, reduction the capacity of the space within the bearing would be little affected and, as compared with the roller retainer having the pillars positioned on a location closer to the inner periphery thereof, the oiling capability can be increased.

Also, since the roller retainer is heat treated in an unassembled condition, i.e., before the rollers are incorporated therein, an advantage can be appreciated that the roller retainer can be heat treated under a condition suitable to the roller retainer, but different from that for the rollers. Notwithstanding, in order for the rollers to be incorporated in the roller retainer, the roller retaining pawls have to be bent after the heat treatment and, therefore, a problem will arise that during the bending some of the roller retaining pawls may be damaged.

However, in the practice of the present invention, the roller retaining pawls have a hardness about equal to or lower than the hardness of the roller retainer itself and is annealed or treated not to be carburized to have a hardness equal to or lower than Hv 400, the roller retaining pawls can easily bent and, thus reduction in strength during the bending of the roller retaining pawls can advantageously be avoided. Also, since the roller retaining pawls can be formed by the use of any known bending technique, formation thereof can be easily achieved as compared with those formed by staking.

Since as discussed above the roller/retainer assembly is excellent in respect of the availability of a large load bearing capacity within the limited available space and the oiling capability, no problem associated with the surface flaw and exfoliation of the rollers and the shaft will occur and an undesirable overheating of the rollers, which would result from the metal-to-metal contact between the rollers and the shaft and the planetary gear, can also be avoided, exhibiting an excellent durability, even when the roller/retainer assembly is used in a manner intervening between the planetary gear of the planetary gear mechanism and the support shaft supporting the planetary gear and under a severe operating condition in which revolution and/or eccentric motion takes place under a highly loaded condition peculiar to the planetary gear support.

In the practice of the first aspect of the present invention, each of the roller retaining pawls may bent at an angle within the range of 30 to 90° relative to the annular portions. If this bending angle is chosen to be within the range of 30 to 90°, the roller can be satisfactorily retained with no possibility of falling off from the retainer and, also, with no problem associated with breakage of the roller retaining pawls.

Also, each of the roller retaining pawls may have a length sufficient to allow each roller retaining pawl to engage a chamfered area of the respective roller. In other words, while the roller retaining pawls may have a length sufficient to allow each roller retaining pawl to assuredly engage the chamfered area of the respective roller, but not to protrude considerably outwardly from the chamfered area. By so choosing, the space for accommodating the rollers can be increased as large as possible while ensuring a firm prevention of the rollers from separating or falling in the radially inward direction.

Each of the roller retaining pawls represents an arcuately bent shape or a straight shape, but the use of the roller retaining pawls of the arcuately bent shape is effective to increase a play of the respective roller in the axial direction.

Also, each of the roller retaining pawls is of a shape having an outwardly tapered thickness. The use of the roller retaining pawls each tapering outwardly is effective to enable the space between the neighboring rollers to be reduced while the roller retaining pawls are positioned radially inwardly as far as possible and, at the same time, interference between the roller retaining pawls and the support shaft can be made difficult to occur.

Also, in the practice of the first aspect of the present invention, the roller retaining pawls may be provided in only one of the annular portions. The use of the roller retaining pawls in only one of the annular portions is effective to make it possible to simplify the manufacture and to reduce the cost. In such case, each of the rollers will be supported at one end by the corresponding roller retaining pawl and may tilt with the opposite end thereof oriented radially inwardly. However, by suitably selecting the relation between the spacing between the annular portion and the length of the respective roller, the opposite end of the roller can be brought into contact with the annular inner face of the annular portion and will not therefore separate from the retainer. Considering that the roller retaining pawl for each roller merely serves to retain the respective roller without allowing the latter to separate from the retainer, when the roller/retainer assembly is handled independently, and will be generally good for nothing when the roller/retainer assembly is incorporated in equipments, even if each roller is supported in a fashion tilted in the manner described above, the roller/retainer assembly can be used satisfactorily.

Furthermore, in the practice of the first aspect of the present invention, in place of the element (d), (e) the roller retainer having the rollers incorporated therein may be heat treated. In such case, since the rollers and the roller retainer can be heat treated simultaneously, the processing cost can advantageously be reduced and, also, by allowing the roller retaining pawls to be processed, or otherwise machined, prior to the heat treatment, they can be easily processed or machined with no fear of damages.

In accordance with another aspect of the present invention, there is also provided a planetary gear support structure, which includes an internally or externally toothed sun gear, a carrier provided for rotation in coaxial relation with the sun gear and having a support shaft provided thereon, a planetary gear rotatably mounted on the support shaft and meshed with the sun gear, and a roller/retainer assembly interposed between the planetary gear and the support shaft. The roller/retainer assembly used therein is of a structure as defined in accordance with the first aspect of the present invention.

The use of the roller/retainer assembly of the present invention in supporting the planetary gear makes it possible to secure a large load bearing capacity with a simplified structure and also to increase the oiling capability. Because of these features, even when the roller/retainer assembly is used in a manner intervening between the planetary gear of the planetary gear mechanism and the support shaft supporting the planetary gear and under a severe operating condition in which revolution and/or eccentric motion takes place under a highly loaded condition peculiar to the planetary gear support, no problem associated with the surface flaw and exfoliation of the rollers and the shaft will occur and an undesirable overheating of the rollers, which would result from the metal-to-metal contact between the rollers and the shaft and the planetary gear, can also be avoided, exhibiting an excellent durability.

In the planetary gear support structure including an internally or externally toothed sun gear, a carrier provided for rotation in coaxial relation with the sun gear, a crankshaft which is a support shaft and which is rotatably supported by the carrier and having a plurality of eccentric shaft portions adjoining to each other, a planetary gear rotatably mounted on each of the eccentric shaft portion of the crankshaft and meshed with the sun gear; and a roller/retainer assembly interposed between the planetary gear and each of the eccentric shaft portions of the crankshaft. The roller/retainer assembly employed in this support structure may be of a structure as defined in connection with the first or second aspect of the present invention discussed above.

The use of the roller/retainer assembly of the present invention in supporting the planetary gear makes it possible to secure a large load bearing capacity with a simplified structure and also to increase the oiling capability. Because of these features, even when the roller/retainer assembly is used in a manner intervening between the planetary gear of the planetary gear mechanism and the support shaft supporting the planetary gear and under a severe operating condition in which revolution and/or eccentric motion takes place under a highly loaded condition peculiar to the planetary gear support, no problem associated with the surface flaw and exfoliation of the rollers and the shaft will occur and an undesirable overheating of the rollers, which would result from the metal-to-metal contact between the rollers and the shaft and the planetary gear, can also be avoided, exhibiting an excellent durability.

A roller/retainer assembly is provided in accordance with a third aspect of the present invention, which including a roller retainer and a plurality of rollers; wherein the roller retainer comprises: an annular body which has a diameter greater than a pitch circle diameter of a row of the rollers; a collar protruding radially inwardly from each of opposite ends of the annular body; a plurality of pockets for accommodating the respective rollers therein, which is defined in the annular body and spaced a distance from each other in a circumferential direction with a pillar left between the neighboring pockets; and an element for preventing the rollers from separating in a direction radially inwardly of the roller retainer. Also, the fill factor P of the rollers relative to an entire circumference of the roller retainer, which is expressed by $P = (d \times n)/(D \times d)$, where d represents the diameter of each of the rollers, n represents the number of the rollers and D represents the pitch circle diameter of the row of the rollers, is equal to or greater than 80%.

According to the third aspect of the present invention, since the fill factor P is chosen to be equal to or greater than 80%, the load bearing capacity of the bearing can be increased within a limited space available. Also, the roller retainer has the pockets formed in the annular body of a diameter greater than the pitch circle diameter and is provided with an element for preventing the rollers from separating in a direction radially inwardly of the roller retainer and, therefore, prevention of the rollers from separating in the radially outwardly and inwardly directions can be achieved even when the roller/retainer assembly has not yet been incorporated in equipments, thus exhibiting an excellent assemblability.

In the practice of the third aspect of the present invention, each of the rollers may have an engagement stud protruding coaxially from each of opposite ends of the respective roller, in which case the element for preventing the rollers from separating may be an annular groove defined in an annular inner face of each of the collars at a location intermediate of a width of the respective collar for engagement with the corresponding engagement stud. The annular groove referred to above is formed in the inner face of the collar at a location, for example, coinciding with the pitch circle diameter of the row of the rollers.

According to this feature, when the roller/retainer assembly has not yet been incorporated in the equipments, the rollers are prevented from separating from the roller retainer in the radially outward direction by opposite side edges of the pockets and from separating from the roller retainer in the radially inward direction by engagement of opposite ends of the rollers in the annular grooves, respectively. Since the pillars each positioned between the neighboring pockets are provided only on an outer peripheral side, as compared with the conventional M-sectioned roller retainer in which pillars are employed in both radially inner and outer diametric portions for the purpose of avoiding an undesirable separation of the rollers, the roller retainer can have a simplified structure and be easy to manufacture and, therefore, the machining limit to which each of the pillars between the neighboring pockets can be narrowed can advantageously increased. Accordingly, not only can the number of the roller be increased for a limited space, but also the load bearing capacity can become maximal. Although formation of the annular grooves is essential, it will not pose any problem in narrowing the width of each of the pillar since the annular grooves are provided in the respective collars.

Also in the practice of the third aspect of the present invention, the element for preventing the rollers from separating may be a projection protruding outwardly from a portion of an annular inner face of each of the collars between the neighboring rollers.

Where the projections are employed for the element for preventing the rollers from separating from the roller retainer, the pillars and the projections function to prevent the roller from separating in the radially outward direction and in the radially inward direction, respectively. Accordingly, as compared with the conventional M-sectioned roller retainer, the pillars can have a simplified structure and can therefore be displaced in position in a radially outward direction with the space between the neighboring rollers reduced consequently. Thus, the number of the rollers that can be accommodated within a limited space can advantageously be increased and the large load bearing capacity can also be secured.

Considering that the projections serve to prevent the rollers from separating in the radially inward direction, the roller retainer can be prepared from a single unitary component part and the number of the component parts used can therefore be reduced, resulting in reduction in cost. Also, since the element for preventing separation of the rollers in the radially inward direction is an element provided locally in the collars of the roller retainer, the presence of the element for preventing separation of the rollers would not affect reduction of the capacity of the space within the bearing and, therefore, as compared with the presence of the pillars on a radially inward side, the oiling capability can be increased. In addition, in view of such element employed in the form of the projections, formation is quite simple and, hence, reduction of the cost can be expected.

Also, in the practice of the third aspect of the present invention, the element for preventing the rollers from separating may be a roller retaining pawl of a bent shape provided in a portion of an annular inner face of each of the collars between the neighboring rollers. In such case, the roller retainer may be heat treated in the unassembled condition. Also, the roller retaining pawl may have a hardness about equal to or lower than the hardness of the roller retainer itself and is annealed or treated not to be carburized to have a hardness equal to or lower than Hv 400. Also, instead of the heat treatment effected to the rollers in the unassembled condition, the roller assembly with the rollers incorporated therein can be heat treated.

According to this feature, since the pillars of the roller retainer and the roller retaining pawls play respective roles to avoid separation of the rollers in directions radially outwardly and inwardly, respectively, the pillars can have a simplified shape and can be positioned at a location closer to the outer periphery than that in the conventional roller/retainer assembly, with the spacing between the neighboring rollers reduced consequently. Hence, the fill factor P of the rollers relative to the row of the rolling element can advantageously increased, accompanied by increase of the number of the rollers that can be employed for a given space, allowing the roller/retainer assembly to exhibit a large load bearing capacity. Separation of the rollers in a direction radially inwardly is achieved by the roller retaining pawls formed in the collars of the roller retainer, the roller retainer can be of one-piece construction with the number of the component parts reduced consequently, resulting in reduction of the cost of manufacture.

Also, since the roller retaining pawls are formed respectively in the collars of the roller retainer, they can be formed locally in respective portions of the roller retainer in an axial direction thereof and this is in contrast to the pillars. For this reason, reduction the capacity of the space within the bearing would be little affected and, as compared with the roller retainer having the pillars positioned on a location closer to the inner periphery thereof, the oiling capability can be increased.

Where the roller retainer is heat treated in the unassembled condition with the rollers having not been incorporated therein, an advantage can be appreciated that the roller retainer can be heat treated under a condition suitable to the roller retainer, but different from that for the rollers. Notwithstanding, in order for the rollers to be incorporated in the roller retainer, the roller retaining pawls have to be bent after the heat treatment and, therefore, a problem will arise that during the bending some of the roller retaining pawls may be damaged.

However, if the roller retaining pawls are annealed or treated not to be carburized, to have a hardness about equal to the hardness of the roller retainer itself and equal to or lower than Hv 400, the bending can easily be performed with no problem associated with damages such as cracking of the roller retaining pawls during the bending process. Also, since the roller retaining pawls can be formed by the use of any known bending technique, formation thereof can be easily achieved as compared with those formed by staking.

On the other hand, where the heat treatment is effected to the roller retainer having the rollers incorporated therein, the roller retainer and the rollers can be simultaneously heat treated, resulting in reduction of the processing cost and, by processing or machining the roller retaining pawls prior to the heat treatment, they can easily be processed or machined with no possible damage.

In the practice of the third aspect of the present invention, the roller retainer may include an outer member, and an inner member serving as the element for preventing the rollers from separating and formed in an annular shape of a diameter smaller than the pitch circle diameter, the inner member having a plurality of pockets defined therein and spaced a distance from each other in a circumferential direction while allowing the rollers to partially protrude in a radially inner direction. The outer member employed therein includes an annular body of a diameter greater than the pitch circle diameter and a collar protruding radially inwardly from each of opposite ends of the annular body.

According to this feature, since the roller retainer is of two-piece construction including the outer member and the inner member, a function of avoiding separation of the rollers in a direction radially outwardly of the roller/retainer assembly and a function of avoiding separation of the rollers in a direction radially inwardly of the roller/retainer assembly are accomplished by the outer member and the inner member, respectively, with those functions of those members consequently simplified. Because of this, the outer and inner members can have a simplified shape and can easily be manufactured and, hence, the processing or machining limit to which each of the pillars between the neighboring pockets can be narrowed can advantageously increased.

Accordingly, not only can the number of the roller be increased for a limited space, but also the load bearing capacity can become maximal.

Also, since the respective shapes of the outer and inner members are simplified as discussed above, the roller guiding function can also be increased and it can be excellent in terms of the strength and the precision. In particular, where the strength of each of the pillars in the inner member, which is difficult to secure a sufficient width for each pillar, tends to be lowered, the inner member can have a plate thickness greater than that of the outer member and, therefore, a relatively large freedom of choice of the optimum design can be obtained.

In the roller/retainer assembly according to the third aspect of the present invention including the roller retainer made up of the inner and outer members, the inner member may have a capability of being constricted to a diameter smaller than the circle inscribed by the row of the rollers.

Since the inner member can be constricted in diameter to a diameter smaller than the circle inscribed by the row of the rollers,

at the time of assemblage, after the rollers have been incorporated in the respective pockets of the outer member, which is the collared member, the inner member in an elastically constricted state can be mounted inside the outer member from inwardly of the row of the rollers. For this reason, the roller/retainer assembly has a high assemblability.

Also, in the roller/retainer assembly according to the third aspect of the present invention, the roller/retainer assembly may be interposed between a planetary gear of a planetary gear mechanism and a support shaft for supporting the planetary gear and wherein the rollers are held in rolling contact with an inner peripheral surface of the planetary gear and the support shaft.

As is well known to those skilled in the art, in the planetary gear mechanism, a large radial loads acts on the planetary gear and the space in which the planetary gear is supported is limited. For this reason, the use of the roller/retainer assembly according to the present invention can bring about an effect that the large bearing capacity can be obtained within the limited space, thus contributed to reduction in size of the planetary gear mechanism.

BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:

Fig. 1 is a transverse sectional view of a roller/retainer assembly according to a first preferred embodiment of the present invention, as viewed in a direction perpendicular to the longitudinal axis of the roller/retainer assembly;
Fig. 2 is a cross-sectional view taken along the line II-II in Fig. 1;
Fig. 3 is a front elevational view of the roller/retainer assembly shown in Fig. 1;
Fig. 4 is a fragmentary sectional view, on an enlarged scale, of an important portion of the roller/retainer assembly according to the first embodiment, showing roller retaining pawls in a roller retainer together with only one of rollers retained thereby;

Fig. 5 is a view similar to Fig. 4, showing a modification of the roller/retainer assembly;

Fig. 6 is a view similar to Fig. 4, showing another modification of the roller/retainer assembly;

Fig. 7 is a view similar to Fig. 4, showing that important portion of the roller/retainer assembly according to a second preferred embodiment of the present invention;

Fig. 8 is a schematic diagram showing a planetary gear mechanism in which the roller/retainer assembly of the present invention is employed;

Fig. 9 is a schematic longitudinal view of the planetary gear mechanism, with a portion cut out to show the manner in which a plurality of the roller/retainer assemblies are employed therein;

Fig. 10 is a schematic longitudinal view of the different planetary gear mechanism, with a portion cut out to show the manner in which a plurality of the roller/retainer assemblies are employed therein;

Fig. 11 is a longitudinal sectional view of a speed increaser unit employed in a wind power generator, which utilizes the planetary gear mechanism having the roller/retainer assemblies of the present invention;

Fig. 12 is a transverse sectional view, on an enlarged scale, showing the details of the planetary gear mechanism in the speed increaser unit shown in Fig. 11;

Fig. 13 is a longitudinal sectional view of the planetary gear mechanism utilizing the roller/retainer assemblies of the present invention;

Fig. 14A is a longitudinal sectional view of the roller/retainer assembly according to a third preferred embodiment of the present invention;

Fig. 14B is a fragmentary transverse sectional view of an important portion of the roller/retainer assembly shown in Fig. 14A, showing the manner in which some of the rollers are retained in the roller retainer;

Fig. 15 is a fragmentary perspective view of a roller retainer employed in the roller/retainer assembly shown in Fig. 14A;

Fig. 16A is a cross-sectional view taken along the line A-A in Fig. 14A, showing a portion of the roller retainer on an enlarged scale;

Fig. 16B is a cross-sectional view taken along the line B-B in Fig. 14A, showing that portion of the roller retainer on a further enlarged scale;

Fig. 17 is a transverse sectional view of the roller/retainer assembly according to a fourth preferred embodiment of the present invention;

Fig. 18 is a cross-sectional view taken along the line V-V in Fig. 17;

Fig. 19 is a front elevational view of the roller/retainer assembly shown in Fig. 17;

Fig. 20 is a view on of a portion of the roller/retainer assembly, as viewed in a direction shown by the arrow VII-VII in Fig. 17;

Fig. 21 is a fragmentary view, showing on an enlarged scale that portion of the roller/retainer assembly of Fig. 17 which is indicated by VIII in Fig. 20;

Fig. 22 is a schematic perspective view of a portion of the roller retainer employed in the roller/retainer assembly of Fig. 17, showing one of roller retaining pawls on an enlarged scale;

Fig. 23 is a transverse sectional view of the roller/retainer assembly according to a fifth preferred embodiment of the present invention;

Fig. 24 is a cross-sectional view, taken along the line XI-XI in Fig. 23;

Fig. 25 is a front elevational view of the roller/retainer assembly shown in Fig. 24;

Fig. 26 is a fragmentary sectional view, on an enlarged scale, of an important portion of the roller/retainer assembly according to the fifth preferred embodiment, showing roller retaining pawls in a roller retainer together with only one of rollers retained thereby;

Fig. 27 is a view similar to Fig. 26, showing a modification of the roller/retainer assembly;

Fig. 28 is a view similar to Fig. 26, showing another modification of the roller/retainer assembly;

Fig. 29 is a view similar to Fig. 26, showing that important portion of the roller/retainer assembly according to a sixth preferred embodiment of the present invention;

Fig. 30A is a fragmentary longitudinal sectional view of the roller/retainer assembly according to a seventh preferred embodiment of the present invention;

Fig. 30B is a fragmentary transverse sectional view of an important portion of the roller/retainer assembly shown in Fig. 30A, showing the manner in which one of the rollers is retained in the roller retainer;

Figs. 31A and 31B are fragmentary sectional views of the roller retainer, showing the sequence of formation of a roller guide in the roller retainer;

Fig. 32A is a longitudinal sectional view of the roller/retainer assembly according to an eighth preferred embodiment of the present invention;

Fig. 32B is a front elevational view of the roller/retainer assembly shown in Fig. 32A;

Fig. 33 is a transverse sectional view of the roller/retainer assembly shown in Fig. 32A;

Fig. 34 is a fragmentary longitudinal sectional view of an important portion of the roller/retainer assembly shown in Fig. 32A, showing the manner in which one of the rollers is retained in the roller retainer;

Fig. 35A is a fragmentary perspective view of the prior art roller retainer;

Fig. 35B is a fragmentary sectional view of a portion of the prior art roller/retainer assembly shown in Fig. 31A;

Fig. 36 is a transverse sectional view of another prior art roller/retainer assembly;

Fig. 37 is a cross-sectional view, taken along the line XVI-XVI in Fig. 36;

Fig. 38 is a front elevational view of the prior art roller/retainer assembly shown in Fig. 36;

Fig. 39 is a transverse sectional view of the further prior art roller/retainer assembly;

Fig. 40 is a cross-sectional view, taken along the line XVX-XVX in Fig. 39;

Fig. 41A is a fragmentary view showing, on an enlarged scale, that portion of the prior art roller/retainer assembly of Fig. 39, which is indicated by A in Fig. 40; and

Fig. 41B is a schematic perspective view of that portion of the prior art roller/retainer assembly shown in Fig. 41A.

DETAILED DESCRIPTION OF THE EMBODIMENTS

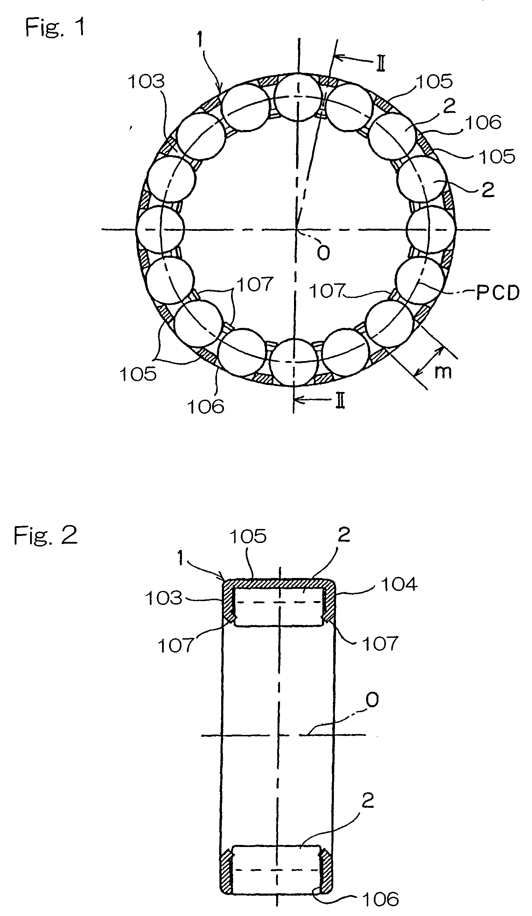

First Embodiment (Fig. 1 to 6)

Referring first to Figs. 1 to 4 showing the roller/retainer assembly according to the first preferred embodiment of the present invention, which assembly is intended for use with, for example, a planetary gear mechanism, the roller/retainer assembly shown therein includes an annular roller retainer 1 and a circular row of rollers 2 carried by the roller retainer 1 and is in practice used in a manner with the rollers 2 held in rolling contact with an outer peripheral surface of a support shaft (not shown) and an inner peripheral surface of a planetary gear (also not shown). The roller retainer 1 includes annular portions 103 and 104 and a plurality of pillars 105 extending straight between respective outer peripheral edges of the annular portions 103 and 104 in a direction axially thereof and circumferentially spaced a predetermined distance, for example, an equal distance from each other.

Each of the pillars 105 is of a rectangular configuration lying in a plane substantially perpendicular to any one of the annular portions 103 and 104, with the neighboring pillars 105 defining a pocket 106 therebetween for rollingly accommodating the corresponding roller 2 therein. As will become clear from the subsequent description, the rollers 2 received within the respective pockets 106 are kept in circumferentially spaced relation by the pillars 105 on respective sides of each roller 2. The annular portions 103 and 104 have respective annular inner surfaces facing axially to each other, and a circular row of roller retaining pawls 107 is formed on the inner surface of each of the annular portion 103 or 104 and adjacent an inner peripheral edge thereof each positioned between the neighboring rollers 2. The rollers 2 are in the form of, for example, needle rollers each made of a steel material or the like.

Each of the end members 103 and 104 is in the form of an annular flat plate lying substantially perpendicular to the center or longitudinal axis O of the roller/retainer assembly and represents a so-called collar of the roller retainer 1. Each of the pockets 106 bound between the neighboring pillars 105 has a width m, as measured in a direction circumferentially of the roller retainer 1, which is slightly smaller than the outer diameter of the respective roller 2 so that the neighboring pillars 105 on respective sides of each pocket 106 can function to avoid separation of the respective roller 2 through such pocket 106 in a direction radially outwardly of the roller retainer 1. The pillars 105 of the roller retainer 1 are positioned radially outwardly from the pitch circle diameter PCD of the circumferential row of the rollers 2, whereas the roller retaining pawls 107 are positioned radially inwardly from the pitch circle diameter PCD referred to above.

The roller retainer 1 is formed by cutting a tubular material or pressing a steel plate, and the roller retaining pawls 107 are formed in the annular inner faces of the annular portions 103 and 104 on respective sides of the roller retainer 1 so as to protrude in a radial pattern. Formation of the roller retaining pawls 107 may be carried out by means of a press work, wire cut electric spark machining or electric discharge machining. The roller retainer 1 so formed is heat treated by itself. For the heat treatment, a carburization (Hv 400 to 650) or a nitrocarburization (Hv 300 or higher) can be suitably employed.

During the heat treatment of the roller retainer 1, the roller retaining pawls have to be so treated that they will not be carburized, or have to be annealed after the hardening, so that the roller retaining pawls 107 can be easily bent. The roller retaining pawls are preferred to have a hardness about equal to or lower than the hardness of the roller retainer 1 in its entirety, also, equal to or lower than Hv 400, at the time of completion of the heat treatment effected to the roller retainer 1. After the rollers 2 have been incorporated in the roller retainer 1 so heat treated, the roller retaining pawls 107 are bent inwardly of the respective annular portions 103 and 104. Bending of the roller retaining pawls 107 may be carried out by means of a press work or a spinning technique.

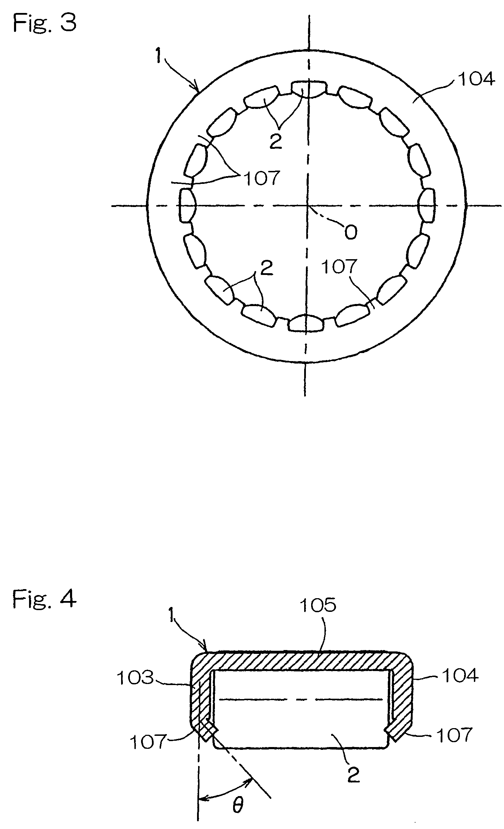

The details of the roller retaining pawls 107 bent inwardly of the respective annular portions 103 and 104 are shown in Fig. 4. The angle of bending è of each roller retaining pawls 107 relative to the associated annular portion 103 or 104 is chosen to be within the range of 30 to 90°. If this bending angle è is smaller than 30°, there is a high possibility that the roller 7 will pass through the roller retaining pawls 107 to fall off from the roller retainer 1. On the other hand, if the retaining pawls 107 are bent to an angle exceeding 90°, there is a high possibility that the roller retaining pawls 107 may break. Accordingly, if the bending angle è is chosen to be within the range of 30 to 90°, the roller 2 can be satisfactorily retained with no possibility of falling off from the retainer 1 and, also, with no problem associated with breakage of the roller retaining pawls 107. Also, the roller retaining pawls 107 have a length sufficient to allow the opposite roller retaining pawls to engage axially spaced chamfered areas of each of the rollers 2.

By suitably selecting the bending angle è and the length of the roller retaining pawls 107 as discussed above, an undesirable separation or fall off of the rollers 2 in a direction radially inwardly of the roller retainer 1 can advantageously be avoided with no need to reduce the space for accommodating the rollers 2.

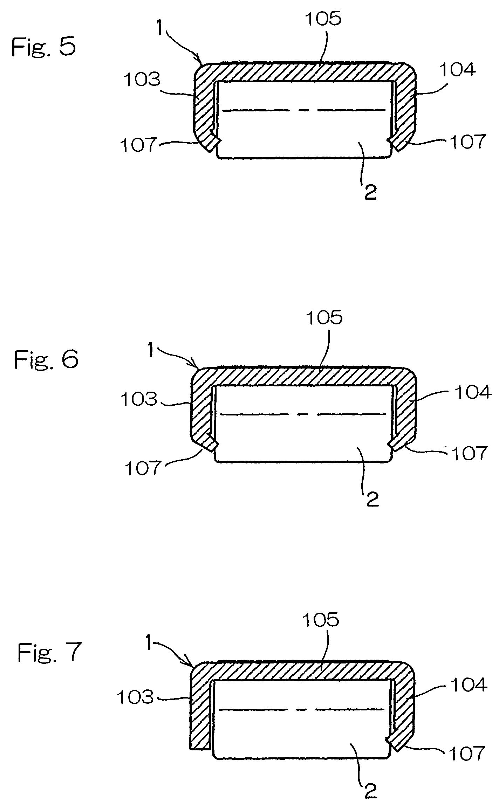

In the embodiment shown in and described with reference to Figs. 1 to 4, each of the roller retaining pawls 107 that are bent from the annular portions 103 and 104 has shown and described as extending straight. However, as shown in Fig. 5 each roller retaining pawl 7 may be curved to represent a generally arcuate shape with its inner face recessed, or as shown in Fig. 6 it may be tapered outwardly with its thickness gradually decreasing towards the tip. Also, even though each roller retaining pawl 7 is so shaped as to extend straight or curved, it may be tapered outwardly as shown in Fig. 6.

With the roller/retainer assembly of the structure described hereinabove, the pillars 105 of the roller retainer 1 and the roller retaining pawls 107 play respective roles to avoid separation of the rollers 2 in directions radially outwardly and inwardly, respectively. Accordingly, the pillars 105 can have a simplified shape and can be positioned at a location closer to the outer periphery with the spacing between the neighboring rollers 2 reduced consequently. Hence, the number of the rollers 2 that can be employed for a given space can be increased to allow the roller/retainer assembly to exhibit a large load bearing capacity. Separation of the rollers 2 in a direction radially inwardly is achieved by the roller retaining pawls 107 formed in the annular portions 103 and 104 of the roller retainer 1, the roller retainer 1 can be of one-piece construction with the number of the component parts reduced consequently, resulting in reduction of the cost of manufacture.

Also, since the roller retaining pawls 107 are formed respectively in the annular portions 103 and 104 of the roller retainer 1, they can be formed locally in respective portions of the annular portions 103 and 104 in an axial direction thereof and this is in contrast to the pillars 2. For this reason, reduction the capacity of the space within the bearing would be little affected and, as compared with the roller retainer having the pillars positioned on a location closer to the inner periphery thereof, the oiling capability can be increased.

Since as discussed above the roller/retainer assembly is excellent in respect of the availability of a large load bearing capacity within the limited available space and the oiling capability, no problem associated with the surface flaw and exfoliation of the rollers 2 and the shaft will occur and an undesirable overheating of the rollers, which would result from the metal-to-metal contact between the rollers 2 and the shaft and the planetary gear, can also be avoided, exhibiting an excellent durability, even when the roller/retainer assembly is used in a manner intervening between the planetary gear of the planetary gear mechanism and the support shaft supporting the planetary gear and under a severe operating condition in which revolution and/or eccentric motion takes place under a highly loaded condition peculiar to the planetary gear support.

Also, since the roller retainer 1 is heat treated in an unassembled condition, i.e., before the rollers are incorporated therein, an advantage can be appreciated that the roller retainer 2 can be heat treated under a condition suitable to the roller retainer, but different from that for the rollers 2. Notwithstanding, in order for the rollers 2 to be incorporated in the roller retainer 1, the roller retaining pawls 107 have to be bent after the heat treatment and, therefore, a problem will arise that during the bending some of the roller retaining pawls 107 may be damaged.

However, in the illustrated embodiment, the roller retaining pawls 107 have a hardness about equal to or lower than the hardness of the roller retainer 1 itself and is annealed or treated not to be carburized to have a hardness equal to or lower than Hv 400, the roller retaining pawls 107 can easily bent and, thus reduction in strength during the bending of the roller retaining pawls 107 can advantageously be avoided. Also, since the roller retaining pawls 107 can be formed by the use of any known bending technique, formation thereof can be easily achieved as compared with those formed by staking.

In addition, since the opposite annular portions 103 and 104 of the roller retainer 1 are each in the form of a flat collar, the surface area can be secured in each of the annular portions 103 and 104 to a certain extent and, for this reason, even when the roller retainer 1 is mounted on, for example, a crankshaft for the support of the planetary gear as will be described later, and is held in sliding contact with neighboring component parts, the roller retainer 1 will not interfere with an inner peripheral surface of the neighboring component parts such as, for example, the planetary gears.

Second Embodiment (Fig. 7)

Fig. 7 illustrates a second preferred embodiment of the present invention. The roller/retainer assembly according to the second embodiment of the present invention is similar to that according to the previously described first embodiment, except that in the second embodiment the roller retaining pawls 107 are formed only in one of the annular portions, for example, the annular portion 104 as shown. As a matter of course, instead of the annular portion 104, the roller retaining pawls 107 may be formed in the annular portion 103.

According to the second embodiment in which the roller retaining pawls 107 are formed only in the annular portion 104, each of the rollers 2 is supported at one end by the corresponding roller retaining pawl 7 and may tilt with the opposite end thereof oriented radially inwardly. However, by suitably selecting the relation between the spacing between the annular portions 103 and 104 and the length of the respective roller 2, the opposite end of the roller 2 can be brought into contact with the annular inner face of the annular portion 103 and will not therefore separate from the retainer 1. Considering that the roller retaining pawl 7 for each roller 2 merely serves to retain the respective roller 2 without allowing the latter to separate from the retainer 1, when the roller/retainer assembly is handled independently, and will be generally good for nothing when the roller/retainer assembly is incorporated in equipments, even if each roller 2 is supported in a fashion tilted in the manner described above, the roller/retainer assembly can be used satisfactorily. Thus, the structure in which the roller retaining pawls 107 are formed only in the annular portion 104 is particularly advantageous in that the cost of manufacture can be reduced.

In the foregoing embodiment the roller retainer 1 has been described as heat treated in a condition prior to the rollers 2 being incorporated therein. However, the roller retainer 1 may be heat treated together with the rollers 2 incorporated therein. In such case, the heat treatment should be performed after the roller retaining pawls 107 have been bent to retain the rollers 2 in position in the roller retainer 1.

Other structural features of the roller/retainer assembly according to the second embodiment are similar to those according to the previously described first embodiment and, therefore, the details thereof are not reiterated for the sake of brevity.

As discussed, where the roller retainer 2 is heat treated together with the rollers 2 incorporated therein, the rollers 2 and the roller retainer 1 can be heat treated simultaneously and the annealing step or the treatment to avoid carburization can be dispensed with, resulting in reduction in processing cost. Also, by processing the roller retaining pawls prior to the heat treatment, the roller retaining pawls can easily be processed with no possibility of breakage.

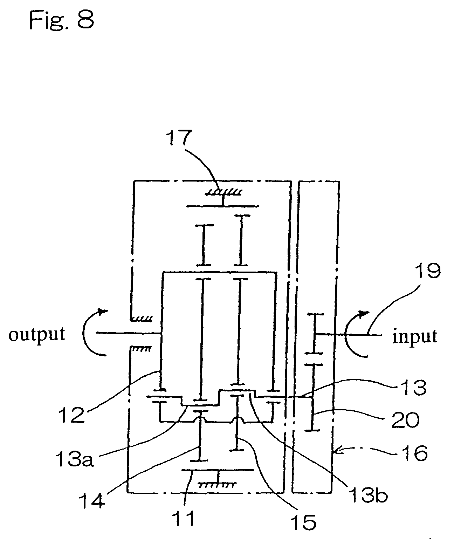

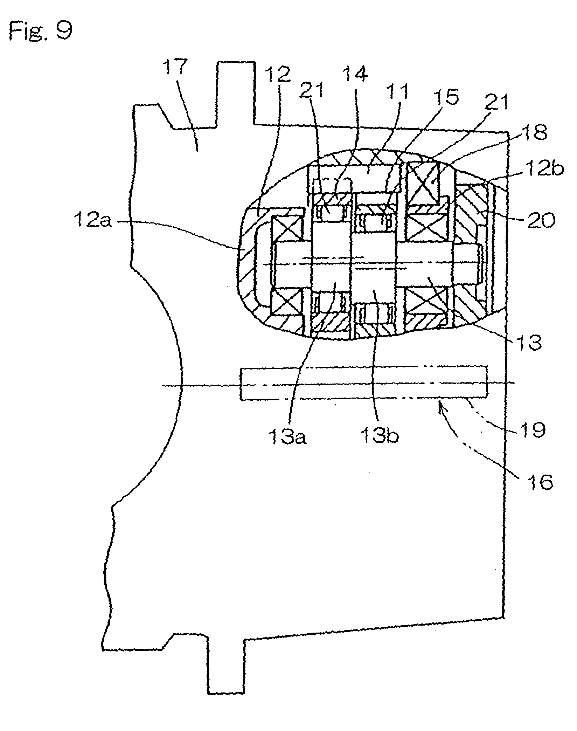

Figs. 8 and 9 illustrates an application of the roller/retainer assembly of the present invention to the planetary gear mechanism that is used as a reduction gear unit. The illustrated planetary gear mechanism includes a ring gear 11, which an internally toothed sun gear; a carrier 12 serving as a rotation output unit; a crankshaft 13, which is a support shaft and rotatably supported by the carrier 12 and has a plurality of eccentric shaft portions 13a and 13b adjoining to each other; a plurality of planetary gears 14 and 15 rotatably mounted on the eccentric shaft portions 13a and 13b of the crankshaft 13 and meshed with the ring gear 11; and a rotation input unit 16 for inputting a rotational drive to the crankshaft 13. The ring gear 11 is fixed to a housing 17 and the carrier 12 is supported within and by the housing 17 through a bearing assembly 18 (Fig. 9) for rotation coaxially together with the ring gear 11.

The rotation input unit 16 is comprised of an input shaft 19 coaxial with the ring gear 11, and a transmission gear 20 mounted on the crankshaft 13 and meshed with a gear portion of the input shaft 19. The crankshaft 13 is provided at a plurality of, for example, three, locations spaced a distance from each other in a direction circumferentially of the carrier 12. The planetary gears 14 and 15 are, as best shown in Fig. 9, mounted rotatably on the eccentric shaft portions 13a and 13b of the crankshaft 13 through roller/retainer assemblies 21, each of which is of the structure designed according to, for example, the first embodiment of the present invention as hereinbefore described.

The planetary gear mechanism of the above described structure operates in the following manner. When the input shaft 19, occupying a center position, is driven in one direction, the three crankshafts 13 rotate in synchronism with each other through the transmission gears 20 to achieve a first speed reduction. The crankshaft 13 and the planetary gears 14 and 15 are coupled with each other through the roller/retainer assemblies 21, and the whirling motion of the crankshafts 13 are synchronized with a composite motion of rotation and revolutions of the planetary gears 14 and 15 within the ring gear 11. The planetary gears 14 and 15 spaced apart from each other in the axial direction revolve along an inner periphery of the ring gear 11, which is the internally toothed sun gear, in a 180° phase displaced relation to each other. As such, inertia forces resulting from the whirling motion of the planetary gears 14 and 15 are counterbalanced with each other. The internally toothed ring gear 11 is fixed in position, while the planetary gears 14 and 15 revolve along the inner periphery of the internally toothed ring gear 11. The three crankshafts 13 are positioned between two disc portions 12a and 12b of the carrier 12 which defines an output member. Accordingly, revolution of the planetary gears 14 and 15 is transmitted to the carrier 12 through revolution of the crankshafts 13, with a speed reduced rotation outputted consequently.

In the planetary gear mechanism of the structure described above, a large radial load acts on the roller/retainer assemblies 21 interposed between the planetary gears 14 and 15 and the crankshafts 13, and the space for installation of the roller/retainer assemblies 21 is limited to the space chosen to avoid increase of the size of the support structure as whole. Also, the roller retainer of the roller/retainer assemblies 21 are held in sliding contact with annular end faces of the adjoining planetary gears 14 and 15.

However, owing to the use of the roller/retainer assemblies each being of the structure shown in and described in connection with any of the foregoing embodiments of the present invention, a relatively large bearing capacity can be obtained within the limited space and since each of the roller retainers 1 has the collar-shaped annular portions 103 and 104 on respective sides thereof, sliding contact of them with the adjoining eccentric planetary gears 14 and 15 will not interfere with respective inner peripheral surface of the planetary gears 14 and 15.

As discussed above, the use of the roller/retainer assemblies 21 in the planetary gear mechanism of a crankshaft type allow the large load bearing capacity to be obtained within the limited space within each roller/retainer assembly 21 of the present invention and, also, an excellent oiling capability to be obtained. Because of these meritorious advantages, even though the roller/retainer assemblies 21 are operated under a severe condition, in which the eccentric motion occurs under a high load operating condition which is peculiar to the planetary gear support, no problems associated with the surface flaw and the exfoliation of the rollers 2 (Fig. 1) and/or the crankshaft 13 occur and, yet, an undesirable overheating of the rollers 2 resulting from the metal-to-metal contact between the rollers 2 and the shaft 13 and the planetary gears 14 and 15 can advantageously avoided, with the durability thereof increased consequently.

Also, even when the roller retainer 1 of each of the roller/retainer assemblies 21 is brought into sliding contact with the neighboring planetary gears 14 and 15 as a result of the eccentric rotation of the crankshaft 13, troubles such as interference of the respective roller retainer 1 with the inner peripheral surfaces of the planetary gears 14 and 15 can advantageously be eliminated.

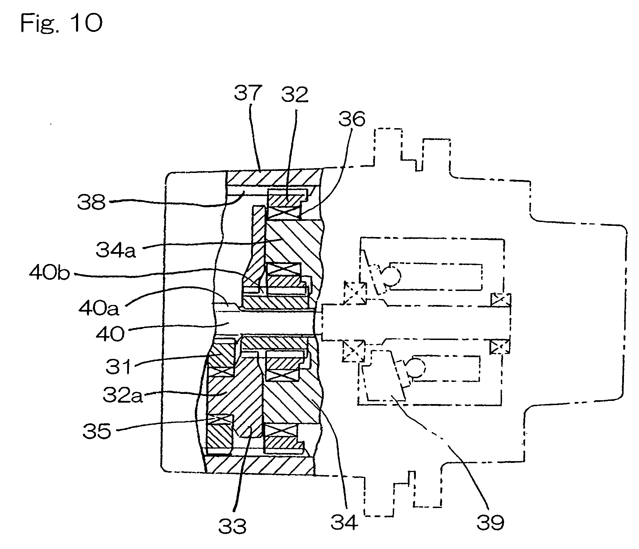

A different type of the planetary gear mechanism is shown in Fig. 10. In this planetary gear mechanism, two planetary gears 31 and 32 are arranged in a single row on each of two carriers 33 and 34. Fig. 10 merely illustrates a relation between the planetary gears 31 and 32 and the carriers 33 and 34 and, therefore, the details of the planetary gear mechanism are not specifically shown.

The planetary gear 31 is mounted on a support shaft 33a, provided in the first carrier 33, through a roller/retainer assembly 35. The planetary gear 31 is arranged at three locations equidistantly spaced in a direction circumferentially of the carrier 33. On the other hand, the planetary gear 32 is mounted on a support shaft 34a, provided in the second carrier 34, through a roller/retainer assembly 36. Similarly, this planetary gear 32 is arranged at four locations spaced in a direction circumferentially of the carrier 34. The rollers of the roller/retainer assemblies 35 and 36 undergo a rolling motion in contact with respective outer surfaces of the support shafts 33a and 33b and the planetary gears 31 and 32. The planetary gears 31 and 32 are meshed with an internally toothed sun gear 38 provided in a casing 37. Also, one of the planetary gears, that is, the planetary gear 31 is meshed with a first externally toothed sun gear 40a provided on a rotary shaft 40, and the other planetary gear 32 is meshed with a second externally toothed sun gear 40b provided on the rotary shaft 40. The carriers 33 and 34 are rotatably and coaxially mounted on the internally toothed sun gear 38.

Each of the roller/retainer assemblies 35 and 36 employed in the above described planetary gear mechanism is of a structure shown in and described in connection with, for example, the first embodiment of the present invention. It is to be noted that the above described planetary gear mechanism is of a type incorporated in a swash plate type axial plunger pump for driving a swash plate 39 for driving a pump unit used therein.

Even when the roller/retainer assembly of the present invention is used for each of the roller/retainer assemblies 35 and 36 in the planetary gear mechanism of the structure shown in and described with reference to Fig. 10, such effects that the large bearing capacity can be obtained, the excellent oiling capability can also be obtained and the durability can be increased are all effectively exhibited thereby.

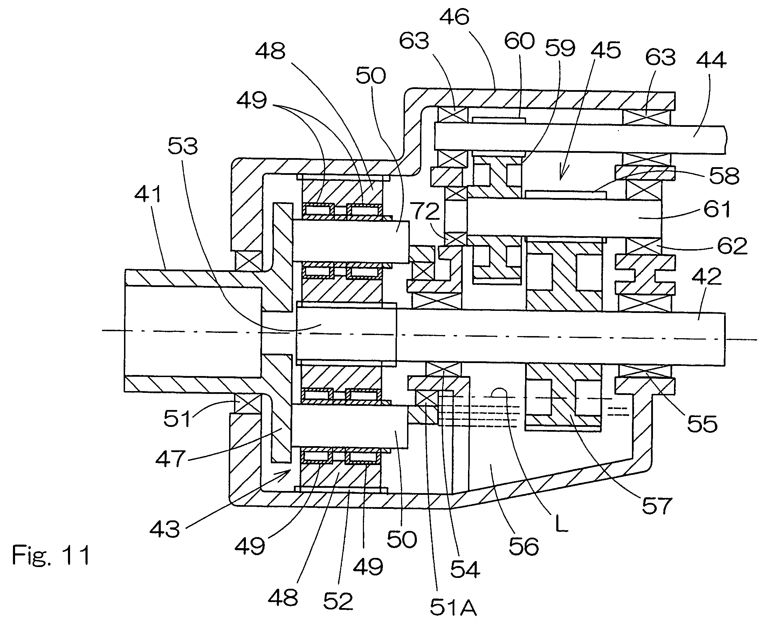

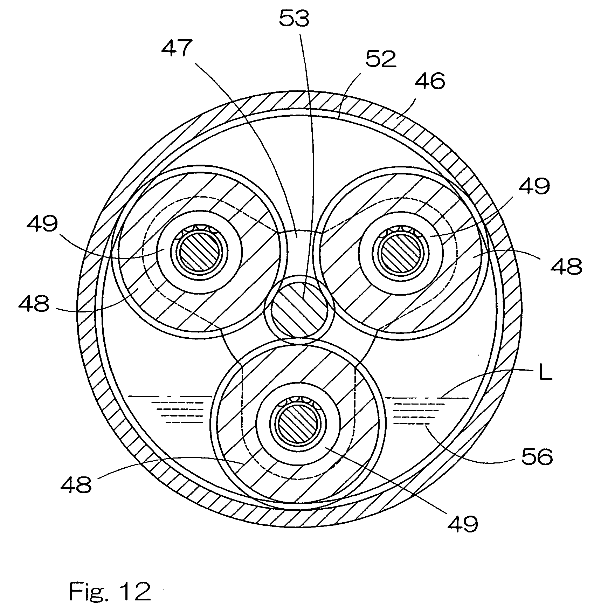

Another type of the planetary gear mechanism to which the present invention can be equally applied is shown in Figs. 11 and 12. Specifically, Fig. 11 illustrates a speed increaser unit for a wind power generator, which makes use of the planetary gear mechanism using the roller/retainer assemblies of the present invention. Specifically, the speed increaser unit shown therein includes planetary gear assemblies 43 for transmitting the drive of an input shaft 41 to a low speed shaft 42 after the rotational speed of the input shaft 41 has been reduced, and a secondary speed increaser unit 45 for transmitting the drive of the low speed shaft 42 to an output shaft 44 after the rotational speed of the low speed shaft 42 has been increased. The planetary gear assemblies 43 and the secondary speed increaser unit 45 are accommodated within a common casing 46. The input shaft 41 is drivingly coupled with a spindle (not shown) of a wind turbine (not shown), whereas the output shaft 44 is drivingly coupled with an electric power generator (not shown).

The planetary gear assemblies 43 are arranged around respective support shafts 50 spaced a distance from each other in a direction circumferentially of a rotatable carrier 47 and include respective planetary gears 48 rotatably mounted on the support shafts 50 through corresponding roller/retainer assemblies 49. In the illustrated example, two roller/retainer assemblies 48 are shown as employed for each of the planetary gear assemblies 43 in a coaxial relation to each other with respect to the corresponding support shaft 50, but one of them may be dispensed with.

The carrier 47 is a member defining an input section for each of the planetary gear assemblies 43 and is an integral part of, or is rigidly coupled with, the input shaft 41. This carrier 47 is rotatably supported within the casing 46 by means of a bearing 51 rotatably supporting the input shaft 41. The planetary gears 48 carried by the carrier 47 are meshed with a ring gear 52, which is an internally toothed sun gear secured to the casing 46, and are also meshed with a sun gear 53 disposed within the casing 46 in coaxial relation with the ring gear 52. The ring gear 52 may be formed directly in the casing 46 or fixedly connected to the casing 46. The externally toothed sun gear 53 is a member defining an output section for each of the planetary gear assemblies 73 and is mounted on the low speed shaft 42 referred to above. The low speed shaft 42 is rotatably supported by the casing 46 through axially spaced apart bearings 54 and 55.

The secondary speed increaser unit 45 is comprised of a train of gears. In the illustrated embodiment, this secondary speed increaser unit 45 includes a gear 57 fixedly mounted on the low speed shaft 42 and meshed with a small diameter gear 58 mounted on an intermediate shaft 61, and a large diameter gear 59 mounted on the intermediate shaft 61 and meshed with a gear 60 mounted on the output shaft 44. The intermediate shaft 61 and the output shaft 44 are rotatably supported by the casing 46 by means of respective bearings 62 and 63.

A bottom portion of the casing 46 defines an oil bath 56 for accommodating a quantity of lubricant oil to a level L sufficient to allow the roller/retainer assemblies 48 supporting the respective planetary gears 48 to be successively immersed into the lubricant oil within the oil bath 56 as the carrier 47 rotates in one direction.

As a matter of course, each of the roller/retainer assemblies 49 referred to above is of the structure shown in and described in connection with, for example, the first embodiment of the present invention.

The operation of the speed increaser unit of the above described structure will now be described. As the input shaft 41 rotates in one direction, the carrier 47 integral or rigid with the input shaft 41 rotates, accompanied by revolution of the planetary gears 48 carried by the carrier 47 through the respective support shafts 50. At this time, the planetary gears 48 revolving in engagement with the fixed ring gear 52 rotate about the respective support shafts 50. Since the planetary gears 40 then rotating about the respective shaft 50 while revolving about the low speed shaft 42 are meshed with the externally toothed sun gear 50, the sun gear 53 rotates at a speed increased relative to the input shaft 41. The sun gear 53 forming the output section of the planetary gear assemblies 43 is mounted on the low speed shaft 42 of the secondary speed increaser unit 45 for rotation together therewith and, therefore, the rotation of the sun gear 53 is transmitted to the output shaft 44 after the rotational speed thereof is increased by the secondary speed increaser unit 45. In this way, the rotation of the wind turbine spindle (not shown) inputted to the input shaft 41 can be transmitted to the output shaft 44 after having been remarkably amplified by the planetary gear assemblies 43 and the secondary speed increaser unit 45. Because of this, even when the wind turbine rotate at a low speed because of a weak wind, the output shaft 44 can provide a high speed rotation capable of permitting an electric power generator to generate an electric power.

Lubrication of each of the roller/retainer assemblies 40 supporting the respective planetary gears 48 is carried out in the following manner. The planetary gears 48 and the corresponding roller/retainer assemblies 40 are successively brought to a position adjacent the bottom of the casing as the carrier 47 rotate about the input shaft 41 and, thus, into the oil bath 56, with the lubricant oil being applied thereto.

As hereinabove described, even when the roller/retainer assembly of the structure according to the previously described first embodiment is applied to each of the planetary gear assemblies 43 for speed increasing, such effects that the large bearing capacity can be obtained, the excellent oiling capability can also be obtained and the durability can be increased are all effectively exhibited thereby.

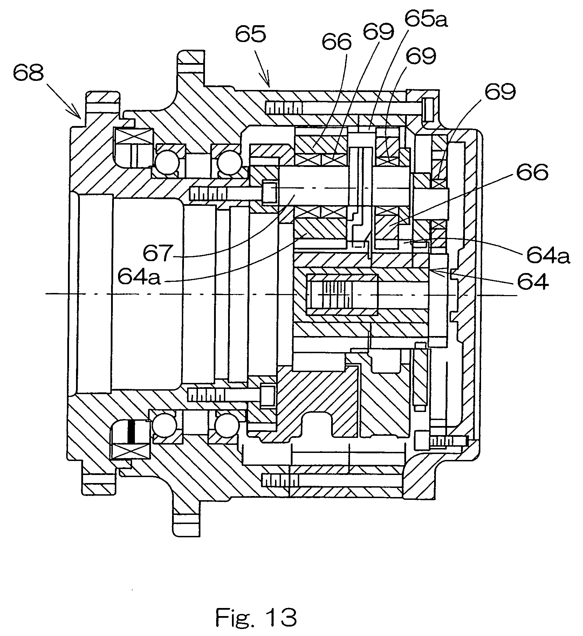

A still further type of the planetary gear mechanism is shown in Fig. 13. In this example, a number of planetary gear assemblies 66 are interposed between an externally toothed sun gear 54a, mounted on an input member 64, and an internally toothed sun gear 65a, mounted inside a casing 65, in a circumferentially equally spaced relation to each other and are engaged with the sun gear 65a and, on the other hand, with the sun gear 64a. Each of the planetary gear 65 is rotatably supported by a respective support shaft 67 through a roller/retainer assembly 69, which support shaft 67 is in turn fixed to a corresponding output member 68 serving as a carrier.

In this structure, when the input member 64 rotates, the planet gears 66 engaged with the sun gear 64a positioned on an outer periphery thereof revolves about the input member 64 while rotating about the associated support shaft 67. The revolution of the planetary gears 66 is converted into a rotary motion of the output member 68 through the support shafts 67 and, therefore, the output member 68 rotates at a speed reduced at a predetermined gear ratio.

Even with this planetary gear mechanism, the roller/retainer assembly of the present invention is employed for each of the roller/retainer assemblies 69 and, therefore, such effects that the large bearing capacity can be obtained, the excellent oiling capability can also be obtained and the durability can be increased are all effectively exhibited thereby. Attention is called that although the roller/retainer assemblies 69 used to rotatably mounting the planetary gears 66 on the support shafts 67 therethrough are lubricated by the lubricant oil within the casing 65, the lubricant oil within the casing 65 is contaminated with foreign matter such as, for example, particulate matters worn off from the gears and, therefore, the lifetime of the bearing tends to occur often as a result of accumulation of the foreign matter and/or blocking of flow of the lubricant oil. However, because of the excellent oiling capability exhibited by each of the roller/retainer assemblies 69, the problem associated with lubrication is effectively eliminated with the lifetime of bearing portions increased consequently.

Third Embodiment (Figs. 14A to 16B)

A third preferred embodiment of the present invention will now be described with particular reference to Figs. 14A to 16B. The roller/retainer assembly according to this third embodiment includes a roller retainer 1 and a circular row of needle rollers 2 carried by the roller retainer 1. The roller retainer 1 includes an annular body 1a of a diameter larger than the pitch circle diameter PCD of the circular row of the rollers 2 and a collar 1b extending radially inwardly from each of opposite ends of the annular body 1a. The annular body 1a is formed with pockets 3 defined therein for non-detachably accommodating therein the respective rollers 2 and spaced an equal distance from each other in a direction circumferentially of the annular body 1a, leaving an axially extending pillar 7 between the neighboring pockets 3.

Each of the collars 1b on respective sides of the roller retainer 1 has an inner annular faces formed with a respective annular groove 4 positioned in coincidence with the pitch circle diameter PCD. The annular groove 4 defined in the annular face of each collar 1b serves as a means for avoiding separation of the rollers 2 in a direction radially inwardly of the roller retainer 1. On the other hand, each of the rollers 2 used in the practice of this embodiment has an engagement studs 2a protruding axially outwardly from opposite end faces thereof in a relation coaxial with the longitudinal axis thereof and also with each other so that the engagement studs 2a can engage in the respective annular grooves 104 in the annular faces of the collars 1b.

The fill factor P of the rollers 2 relative to the total circumference of the roller retainer 1 is chosen to be equal to or greater than 80%. This fill factor P can be calculated by the following formula:

$$P = (d \times n)/(D \times đ)$$

wherein d represents the diameter of each of the rollers 2 used, n represents the number of the rollers 2 used and D represents the pitch circle diameter of the circular row of the rollers 2.

The annular grooves 4 defined in the respective collars 1b in the roller retainer 1 are of a generally trapezoidal section, but may have any suitable sectional shape, for example, arcuate or any other suitable sectional shape, provided that they can serve to prevent the rollers 2 from separating or falling in a direction counter to the annular body 1a. Also, each annular groove 4 may not be always symmetrical in shape with respect to the mid center line passing intermediate of the width thereof, may have such a shape that a tip of each collar 1b, i.e., an inner peripheral portion of each collar 1b, is formed with a protuberance that defines a side face of the respective annular groove 4 and a base portion of the respective collar 1b adjacent the annular body 1a has nothing that defines the annular side face of the groove.

The engagement studs 2a protruding axially outwardly from the opposite ends of each roller 2 are shown in the form of a round protuberance of a generally trapezoidal cross-section, but may be in the form of a spherical protuberance. Also, in place of the use of the engagement studs 2a for each roller 2, each of the opposite ends of the respective roller 2 may be so shaped as to represent an outwardly curved configuration, for example, an outwardly protruding semi-spherical configuration, in which case, the corresponding annular groove 4 in each of the collars 1b of the roller retainer 1 should have a width substantially equal to the width of the respective collar 1b.

Each of the pockets 3 in the annular body of the roller retainer 1 is delimited by axially extending, opposite side edges and circumferentially extending, opposite end edges, all left in the roller retainer 70 by the respective pocket 3 when the latter is formed. The axially extending, opposite side edges of each pocket 3 has an axially intermediate portion recessed as at 105 to define a pair of roller guide areas 3a positioned on respective sides of the recessed area 5. This recessed area 5 represents a generally trapezoidal shape and extends completely across the thickness of the annular body 1a. Because of the presence of the opposite recessed areas 105, each of the pockets 3 has an intermediate portion of a width Wa, which is greater than the width Wb of opposite end portions thereof.

Also, a circumferentially extending groove 6 is formed in an intermediate portion of outer surfaces of the respective pillars 7 each bound between the neighboring pockets 3. This circumferentially extending groove 6 has a groove width Lb smaller than the width La of each recessed area 5 in the side edge of the respective pocket 3.

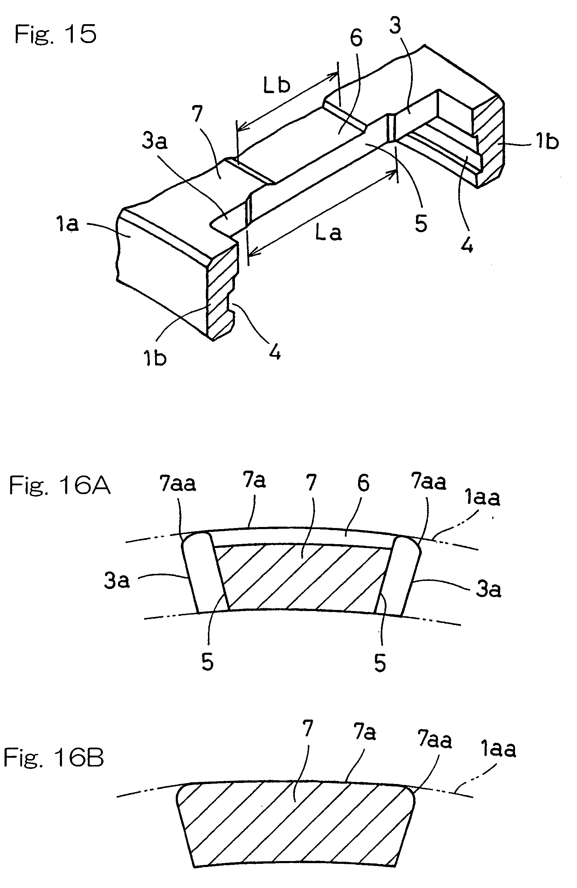

Fig. 16A illustrates the transverse sectional shape of a portion of each pillar 7, where the circumferentially extending groove 6 is formed, and Fig. 16B illustrates the transverse sectional shape of another portion of each pillar 7, where no circumferentially extending groove is formed. As shown therein, each of the pillars 7 has a sectional shape in which a pocket defining edge 7aa of a radially outer side face 7a is positioned closer to the pitch circle than the position 1aa of the radially outer surface of the annular body 1a of the roller retainer 1. The pocket defining edges 7a are each in the form of a rounded area and, at a position intermediate of the width of each pillar 7, the radially outer side face 7a is held at a location level with the position 1aa of the outer peripheral surface of the annular body 1a of the roller retainer 1. The extend to which the rounded area is formed may be limited to the pocket defining edge 7aa, or may extend from the pocket defining edge 7aa to a position intermediate of the width of each pillar 7. Formation of the rounded area can be accomplished by a tumbling technique where the roller retainer 1 is made of steel or any other metal.

With the roller/retainer assembly of the structure according to the third embodiment shown in and described with reference to Figs. 14A to 16B, since the fill factor of the rollers 2 relative to the entire circumference of the roller retainer 1 is chosen to be equal to or greater than 80%, the load bearing capacity of the roller/retainer assembly can be increased for a given space. Hence, in the event that the roller/retainer assembly is employed for supporting, for example, the planetary gear mechanism as will be described later, the effect thereof can be effectively exhibited.

Also, the roller/retainer assembly according to the third embodiment can provide the following effects. Specifically, in the roller retainer 1, separation or fall of the rollers 2 in the radially outward direction can be prevented by the pillars 7 each between the neighboring pockets 3, while separation or fall of the rollers 2 in the radially inward direction can be prevented by the engagement of the opposite ends of each roller 2 in the respective annular grooves 4. Although the engagement between the opposite ends of each roller 2 and the respective annular grooves 4 is also effective to avoid separation or fall of the rollers 2 in the radially outward direction, this radially outward separation or fall of the rollers 2 can be rather effectively avoided by the pillars 2. As discussed above, since the rollers 2 are prevented from separating or falling not only in the radially outward direction, but in the radially inward direction, the handling capability of the bearing is excellent.

In order for each roller 2 to be incorporated in the roller retainer 1 with the engagement studs 2a engaged in the respective annular grooves 4 in the collars 1b, the roller 2 has to be pushed from inside the roller retainer 1 to allow the engagement studs 2a to be slipped into the respective annular grooves 4. At this time, the roller retainer 1 undergoes a plastic deformation by the effect to a pushing force applied to the respective roller 2, with the collars 1b consequently expanding away from each other in a direction axially of the roller retainer 2 to allow the roller 2 to be inserted in between the collars 1b. Once the roller 2 has been seated with its engagement studs 2a engaged in the respective annular grooves 4, the collars 1b return to the initial shape by the effect of a resilient restoring force, with the roller 2a consequently retained in position in the roller retainer 1 with the engagement studs 2a engaged in the annular grooves 4.

As hereinabove described, while the roller retainer 1 is so designed as to have a function of preventing separation or fall of the rollers 2 in a direction not only radially outwardly thereof, but also radially inwardly thereof, separation or fall of the rollers 2 in a direction radially inwardly of the roller retainer 1 is specifically accomplished by the annular grooves 4 in the respective collars 1b. Accordingly, each of the pillars 7 can have a simplified shape with no need to bend it to represent a generally V-shaped configuration or the like. For this reason, little limitation is imposed on machining and the width of each of the pillars 1b can be reduced as small as possible, allowing the increase of the number of the rollers 2 or the diameter of each of the rollers 2, so that the fill factor P can be increased to increase the load bearing capability with no need to increase the space for installation of the bearing assembly.

When the bearing assembly is in use, each of the rollers 2 is guided by the roller guide areas 3a on respective ends of the side edges of each pocket 3. Since the roller guide area 3a are defined only on the opposite end portions of each pocket with the intermediate portion of each of the opposite side faces of the respective pocket recessed inwardly to provide the recesses area 5, flow of an oil circulating from an outer peripheral surface to an inner peripheral surface, and vice versa, of the roller retainer 1 can be obtained by the presence of the recessed areas 105, thereby avoiding reduction of the lubricity which would occur when the flow of the lubricant oil is blocked by the roller guide areas 3a. For this reason, an undesirable increase of the torque resulting from an insufficient lubrication can be avoided. Since the pillars 7 are formed with the circumferentially extending groove 6 on the outer peripheral surface thereof, which groove 6 has a width within the limit of the width of the recessed areas 105, the fluidity of the lubricant oil can be increased by the presence of the circumferentially extending groove 6.

Also, since the pocket defining edges 7a of the outer peripheral side faces of the pillars 7 are positioned at a location closer to the pitch circle (PCD) than the potions 1aa of the outer peripheral surface of the annular body 1a of the roller retainer 1, an undesirable scraping of the lubricant oil by edges of the pocket defining edges 7aa can advantageously relieved to thereby suppress a loss of torque during rotation which would otherwise occur as a result of the insufficient lubrication.

Hereinafter, examples of manufacture of the roller/retainer assembly according to this embodiment will be demonstrated for illustration purpose.

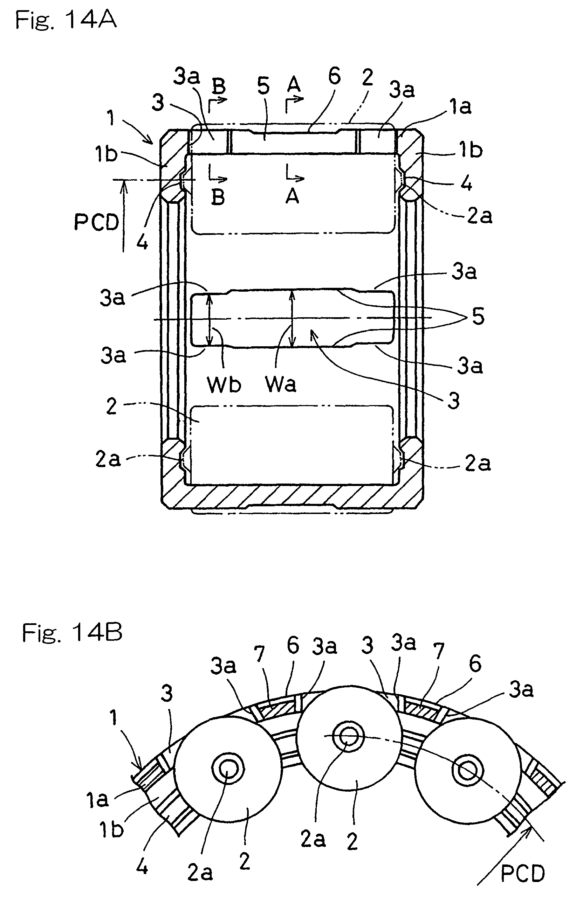

Two roller/retainer assemblies, as identified by Examples 1 and I, respectively, were assembled, in which the pillars had a respective width as specified in Table 1, the rollers had a respective diameter as specified in Table 1, the number of the rollers employed was such as shown in Table 1 and the pitch circle diameter PCD was such as shown in Table 1. For comparison purpose, the roller/retainer assembly shown in Fig. 14 was also assembled according to the specification shown in Table 1 and is identified as Comparison 1.

The roller/retainer assembly in Example 1 had an inner diameter of 46 mm, an outer diameter of 66 mm and a width of 22.8 mm and employed the rollers of 19.1 mm in length and the roller retainer of 50.5 mm in inner diameter, 75.7 mm in outer diameter with the annular body 1a having a wall thickness of 2.0 mm.

The roller/retainer assembly in Example 2 had an inner diameter of 39 mm, an outer diameter of 59 mm and a width of 22.8 mm and employed the rollers of 19.1 mm in length and the roller retainer of 44.3 mm in inner diameter, 55.1 mm in outer diameter with the annular body 1a having a wall thickness of 1.9 mm.

The roller/retainer assembly in Comparison 1 had an inner diameter of 46 mm, an outer diameter of 66 mm and a width of 22.8 mm and employed the rollers of 18 mm in length and the roller retainer of 50.2 mm in inner diameter, 65.5 mm in outer diameter with the annular body 1a having a wall thickness of 2.0 mm.

Table 1

| | Pillar Width | Roller Dia. | Roller No. | PCD | Fill Factor (%) |
|---|---|---|---|---|---|
| Comp. 1 | Unidentified | 10 | 12 | 56 | 68 |
| Ex. 1 | 2.55 | 10 | 16 | 56 | 91 |
| Ex. 2 | 2.55 | 10 | 14 | 46 | 91 |

As shown in Table 1, the fill factor P of the rollers relative to the entire circumference of the roller retainer in each of Examples 1 and 2 was 91%, satisfying the lowermost limit of 80% as provided for by the present invention. In these Examples 1 and 2, nothing unreasonable occurred in the manufacture of the roller retainer 1 and the rollers 2, in dimension and in strength and, therefore, the manufacture was simple and the strength was also excellent.

In contrast thereto, in Comparison 1, which utilized the generally M-sectioned roller retainer as shown in Figs. 35A and 35B, although it had been assembled with the diameter of the rollers, the number of the roller and the pitch circle diameter PCD as shown in Fig. 14, the fill factor P could be barely increased to 68% and, therefore, the load bearing capacity was found unsatisfactory.

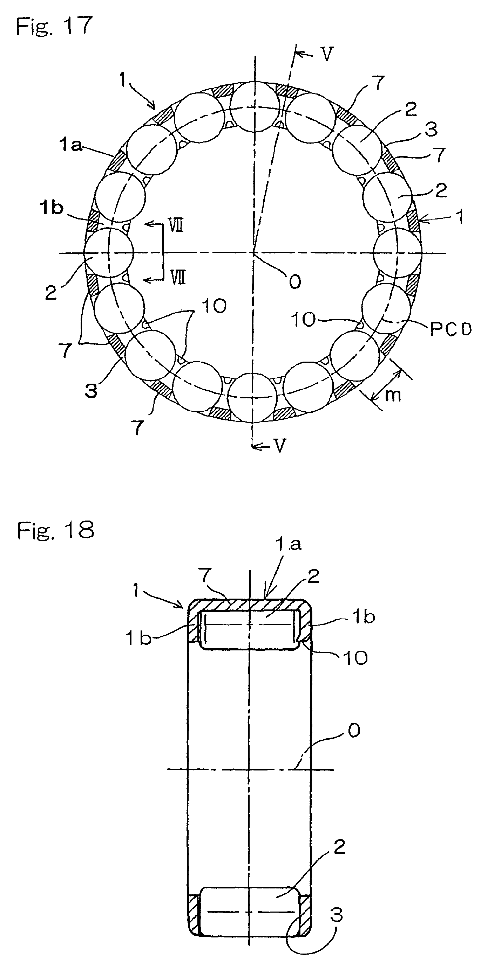

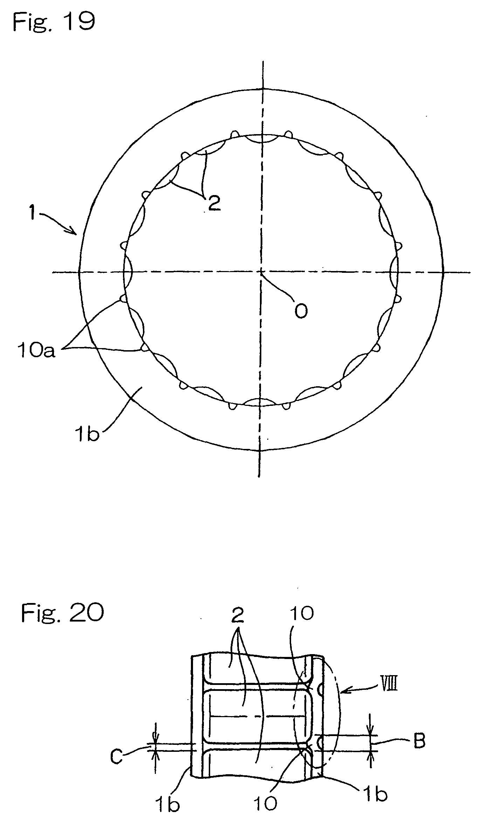

Fourth Embodiment (Figs. 17 to 22)

With particular reference to Figs. 17 to 22, the roller/retainer assembly according to a fourth preferred embodiment of the present invention will be described. The roller/retainer assembly shown therein includes a roller retainer 1 and a circumferential row of rollers 2 carried by the roller retainer 1. The roller retainer 1 includes an annular body 1a of a diameter larger than the pitch circle diameter PCD of the circular row of the rollers 2 and a collar 1b extending radially inwardly from each of opposite ends of the annular body 1a. The annular body 1a is formed with pockets 3 defined therein for non-detachably accommodating therein the respective rollers 2 and spaced an equal distance from each other in a direction circumferentially of the annular body 1a, leaving an axially extending pillar 7 between the neighboring pockets 3 effective to non-detachably accommodating therein the corresponding rollers 2. Each of the pillars 7 is of a rectangular configuration lying in a plane substantially perpendicular to any one of the collars 1b.

One of the collars 1b of the roller retainer 1 has a radially inward end formed with a number of projections 10, each positioned between the neighboring rollers 2, for avoiding separation or fall of the rollers in a direction radially inwardly of the roller retainer 1. The roller retainer 1 is prepared from a unitary steel plate by the use of any known press work. The rollers 2 are made of a bearing steel or the like and are employed in the form of, for example, a needle roller. The fill factor P of the rollers 2 relative to the entire circumference of the roller retainer 1 in this roller/retainer assembly is chosen to be equal to or greater than 80%.

Each of the collars 1b on respective sides of the roller retainer 1 is in the form of an annular flat plate lying perpendicular to the longitudinal axis O of the roller retainer 1 and has a width, as measured between inner and outer peripheral edges thereof in a direction radially thereof, which is chosen to be somewhat smaller than the outer diameter of the rollers 2. Each of the pillars 7 between the neighboring pockets 3 has a width, as measured in a direction circumferentially of the roller retainer 1, which is chosen to be slightly smaller than the outer diameter of the rollers 2 so that the pillars 7 can function to avoid separation or fall of the rollers 2 in a direction radially outwardly of the roller retainer 1. The pillars 7 of the roller retainer 1 are located radially outwardly of the pitch circle diameter PCD of the circumferential row of the rollers 2 with the projections 10 positioned radially inwardly of the pitch circle diameter PCD.

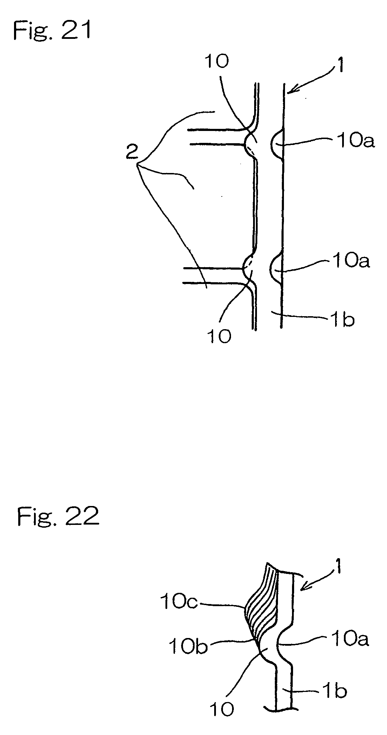

Each of the projections 10 is in the form of a projection comprised of a staked portion. Staking is a localized plastic processing used to form a projection by crimping. Each of the projections 10 has such a countersunk shape, when viewed from inside the roller retainer 1 as shown in Fig. 21, as to protrude arcuately towards an inner face in an axial direction with its rear face recessed as at 10a. Also, each projection 100 protrudes the greatest height at a portion 7b thereof adjacent the inner peripheral edge of the corresponding collar 1b as best shown in Fig. 22, with the height of the projection 100 gradually decreasing towards the outer peripheral edge of the corresponding collar 1b. In Fig. 22, the lowest portion of each projection 100 is indicated by 10c. The greatest height of each projection 100 is about equal to the axial width of a chamfered portion of the opposite ends of each roller 2. The width B of a maximum width portion of each projection 100 in a direction circumferentially of the roller retainer 1 is greater than the gap C between the neighboring rollers 2 in the circular row.

In the roller/retainer assembly of the structure shown in and described with reference to Figs. 17 to 22, the pillars 7 of the roller retainer 1 and the projections 10 play roles of avoiding separation or fall of the rollers 2 in directions radially outwardly and radially inwardly, respectively, and, therefore, the pillars 7 can be positioned at a location displaced radially outwardly, enabling the gap between the neighboring rollers to be minimized. Accordingly, the number of the rollers 2 that can be used can advantageously be increased and, hence, a large load bearing capacity can be secured. Hence, the fill factor P of the rollers 2 relative to the entire circumference of the roller retainer 1 could successfully be increased to a value equal to or greater than 80%. Also, since each pillar 7 can have a simplified shape, a function exhibited by the pillars 7 to guide the rollers 2 is increased, exhibiting an excellent rotational precision.

Since separation or fall of the rollers 2 in a direction radially inwardly of the roller retainer 1 is carried out by the projections 10 formed in the collar 1b of the roller retainer 1, the roller retainer 1 can be prepared from a unitary component and the number of component parts used can advantageously reduced to reduce the cost of manufacture. Since in this embodiment the projections 10 are in the form of staked portions, the processing is further simplified and the processing cost is low. Also, the projections 10 in the radially inward direction are provided in the collar 1b of the roller retainer 1, unlike the pillars 7 they suffice to be locally formed in a portion in the axial direction. For this reason, even through the projections 10 are employed, the influence brought about on reduction of the space capacity within the bearing assembly is minimal and, as compared with the roller/retainer assembly in which the pillars are provided radially inwardly, the oiling capability can be increased. In the assemblage of the roller/retainer assembly, where the projections 10 are formed by staking, after the staking has been effected to the collar 1b to form the projections 10, the rollers 2 are incorporated in the roller retainer 1 while the staked portions are elastically deformed.

It is to be noted that since the projections 10 are formed in only one of the collars 1b and, hence, the rollers 2 are supported at one end thereof by the respective projections 10, the rollers 2 may tilt with the opposite end thereof oriented radially inwardly. However, by suitably selecting the relation between the spacing between the collars 1b and the length of the rollers 2, the opposite end of the roller 2 can be brought into contact with the annular inner face of the annular body 1a and will not therefore separate from the retainer 1. Considering that the projections 10 merely serves to retain the respective rollers 2 without allowing the latter to separate from the roller retainer 1, when the roller/retainer assembly is handled independently, and will be generally good for nothing when and after the roller/retainer assembly has been incorporated in equipments, even if each roller 2 is supported in a fashion tilted in the manner described above, the roller/retainer assembly can be used satisfactorily. Thus, the structure in which the projections 10 are formed in only one of the collars 1b is particularly advantageous in that the structure is simple and the cost of manufacture can be reduced.

Also, since the opposite collars 1b of the roller retainer 1 are each in the form of a flat annular plate, the surface area can be secured in each of the collars 1b to a certain extent and, for this reason, even when the roller retainer 1 is mounted on, for example, a crankshaft for the support of the planetary gear as will be described later, and is held in sliding contact with neighboring component parts, the roller retainer 1 will not interfere with an inner peripheral surface of the neighboring component parts such as, for example, the planetary gears.

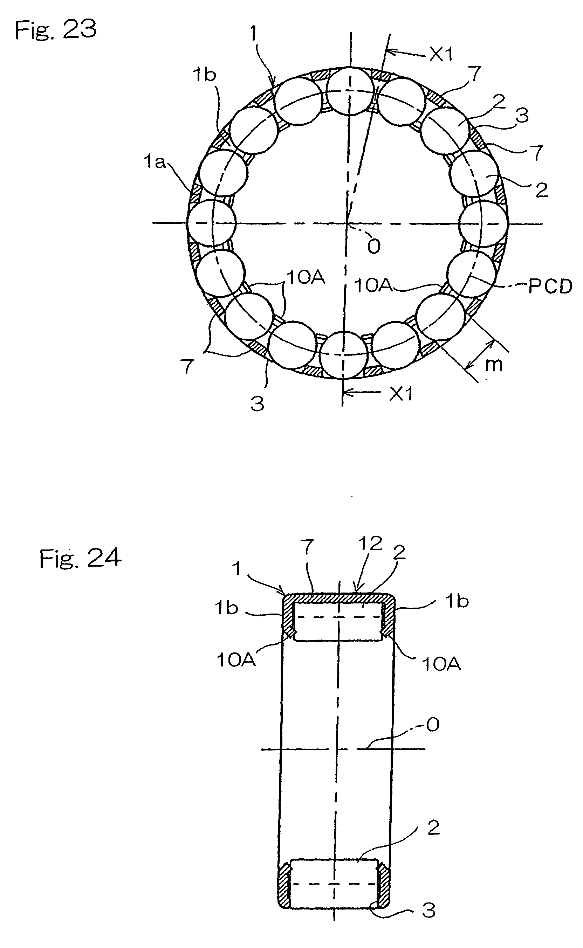

Fifth Embodiment (Figs. 23 to 26)

The roller/retainer assembly according to a fifth preferred embodiment of the present invention is shown in Figs. 23 to 26. Referring to these figures, the roller/retainer assembly shown therein is similar to that according to the fourth embodiment shown in and described with reference to Figs. 17 to 22, except that in this embodiment each projection 100 is employed in the form of a roller retaining pawl 10A formed by bending. Even in this embodiment, as is the case with that according to the previously described fourth embodiment, the roller/retainer assembly shown therein includes a roller retainer 1 and a circumferential row of rollers 2 carried by the roller retainer 1. The roller retainer 1 includes an annular body 1a of a diameter larger than the pitch circle diameter PCD of the circular row of the rollers 2 and a collar 1b extending radially inwardly from each of opposite ends of the annular body 1a. The annular body 1a is formed with pockets 3 defined therein for non-detachably accommodating therein the respective rollers 2 and spaced an equal distance from each other in a direction circumferentially of the annular body 1a, leaving an axially extending pillar 7 between the neighboring pockets 3 effective to non-detachably accommodating the corresponding rollers 2 therein. Each of the pillars 7 is of a rectangular configuration lying in a plane substantially perpendicular to any one of the collars 1b.

Each of the collars 1b of the roller retainer 1 has a radially inward end formed with a number of projections, each positioned between the neighboring rollers 2, as a means for avoiding separation or fall of the rollers in a direction radially inwardly of the roller retainer 1. In this embodiment, each of the projections as a means for avoiding separation or fall of the rollers in a direction radially inwardly of the roller retainer 1 is in the form of a roller retaining pawl 10A of a bent shape is employed. The roller retainer 1 is prepared from a unitary steel plate by the use of any known press work. The rollers 2 are made of a bearing steel or the like and are employed in the form of, for example, a needle roller.

The fill factor P of the rollers 2 relative to the entire circumference of the roller retainer 1 in this roller/retainer assembly is chosen to be equal to or greater than 80%.

Each of the collars 1b on respective sides of the roller retainer 1 is in the form of an annular flat plate lying perpendicular to the longitudinal axis O of the roller retainer 1 and has a width m, as measured between inner and outer peripheral edges thereof in a direction radially thereof, which is chosen to be slightly smaller than the outer diameter of the rollers 2, so that the pillars 7 can serve to prevent the rollers 2 from separating or falling in a direction radially outwardly. The pillars 7 of the roller retainer 1 are located radially outwardly of the pitch circle diameter PCD of the circumferential row of the rollers 2 with the roller retaining pawls 10A positioned radially inwardly of the pitch circle diameter PCD.

The roller retainer 1 is formed by cutting a tubular material or pressing a steel plate, and the roller retaining pawls 10A are formed in the annular inner faces of the collars 1b on respective sides of the roller retainer 1 so as to protrude in a radially inwardly thereof. Formation of the roller retaining pawls 107 may be carried out by means of a press work, wire cut electric spark machining or electric discharge machining. The roller retainer 1 so formed alone is heat treated. For the heat treatment, a carburization (Hv 400 to 650) or a nitrocarburization (Hv 300 or higher) can be suitably employed.

During the heat treatment of the roller retainer 1, the roller retaining pawls 10A have to be so treated or protected that they will not be carburized, or have to be annealed after the hardening, so that the roller retaining pawls 10A can be easily bent. The roller retaining pawls 10A are preferred to have a hardness about equal to or lower than the hardness of the roller retainer 1 in its entirety, for example, equal to or lower than Hv 400, at the time of completion of the heat treatment effected to the roller retainer 1. After the rollers 2 have been incorporated in the roller retainer 1 so heat treated, the roller retaining pawls 10A are bent inwardly of the respective collars 1b. Bending of the roller retaining pawls 10A may be carried out by means of a press work or a spinning technique.

The details of the roller retaining pawls 10A bent inwardly of the respective annular are shown in Fig. 4. The angle of bending è of each roller retaining pawls 10A relative to the associated collar 1b is chosen to be within the range of 30 to 90°. If this bending angle è is smaller than 30°, there is a high possibility that the roller 7 will pass through the roller retaining pawls 10A to fall off from the roller retainer 1. On the other hand, if the retaining pawls 10A are bent to an angle exceeding 90°, there is a high possibility that the roller retaining pawls 10A may break. Accordingly, if the bending angle è is chosen to be within the range of 30 to 90°, the roller 2 can be satisfactorily retained with no possibility of falling off from the retainer 1 and, also, with no problem associated with breakage of the roller retaining pawls 10A. Also, the roller retaining pawls 10A have a length sufficient to allow the opposite roller retaining pawls to engage axially spaced chamfered areas of each of the rollers 2.

By suitably selecting the bending angle è and the length of the roller retaining pawls 10A as discussed above, an undesirable separation or fall off of the rollers 2 in a direction radially inwardly of the roller retainer 1 can advantageously be avoided with no need to reduce the space for accommodating the rollers 2.

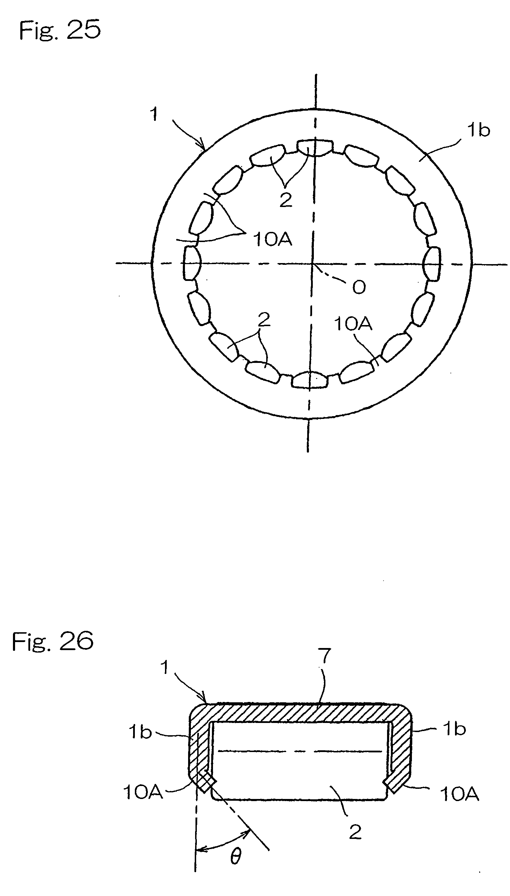

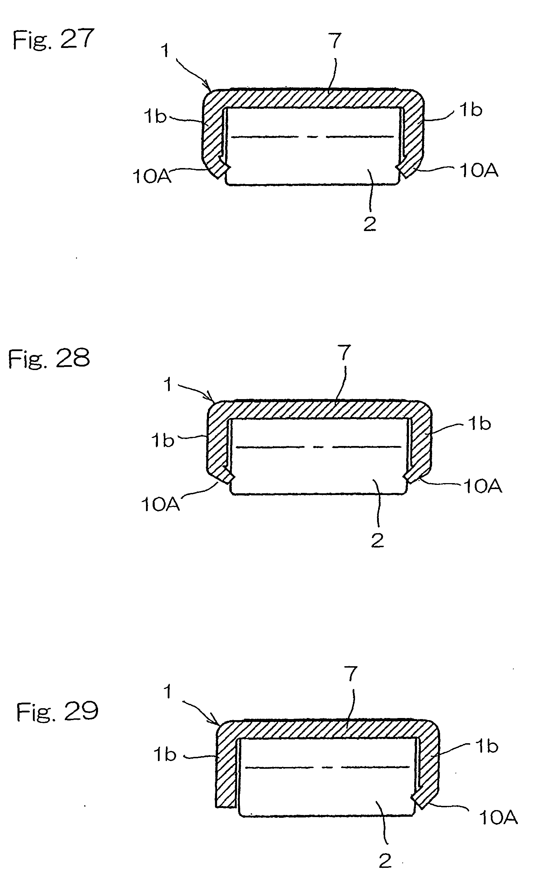

It is to be noted that in Fig. 26, each of the roller retaining pawls 10A that are bent from the collars 1b has shown and described as extending straight. However, as shown in Fig. 27 each roller retaining pawl 7 may be curved to represent a generally arcuate shape with its inner face recessed, or as shown in Fig. 28 it may be tapered outwardly with its thickness gradually decreasing towards the tip. Also, even though each roller retaining pawl 7 is so shaped as to extend straight or curved, it may be tapered outwardly as shown in Fig. 28. Also, even though the roller retaining pawls 10A may have any of the shapes discussed above, the roller retaining pawls 10A may be formed in only one of the collars 1b as shown in Fig. 29 and employed in a sixth embodiment of the present invention.

With the roller/retainer assembly of the structure described hereinabove, the pillars 7 of the roller retainer 1 and the roller retaining pawls 10A play respective roles to avoid separation of the rollers 2 in directions radially outwardly and inwardly, respectively. Accordingly, the pillars 7 can have a simplified shape and can be positioned at a location closer to the outer periphery with the spacing between the neighboring rollers 2 reduced consequently. Hence, the number of the rollers 2 that can be employed for a given space can be increased to allow the roller/retainer assembly to exhibit a fill factor P of the rollers relative to the entire circumference of the roller retainer, which is equal to or greater than 80%, accompanied by increase of the large load bearing capacity. Separation of the rollers 2 in a direction radially inwardly is achieved by the roller retaining pawls 10A formed in the collars 1b of the roller retainer 1, the roller retainer 1 can be of one-piece construction with the number of the component parts reduced consequently, resulting in reduction of the cost of manufacture.

Also, since the roller retaining pawls 10A are formed respectively in the collars 1b of the roller retainer 1, they can be formed locally in respective portions of the collars 1b in an axial direction thereof and this is in contrast to the pillars 7. For this reason, an influence is little brought about on reduction the capacity of the space within the bearing and, as compared with the roller retainer having the pillars positioned on a location closer to the inner periphery thereof, the oiling capability can be increased.

Also, since the roller retainer 1 is heat treated in an unassembled condition before the rollers are incorporated therein, an advantage can be appreciated that the roller retainer 2 can be heat treated under a condition suitable to the roller retainer, but different from that for the rollers 2. Notwithstanding, in order for the rollers 2 to be incorporated in the roller retainer 1, the roller retaining pawls 10A have to be bent after the heat treatment and, therefore, a problem will arise that during the bending some of the roller retaining pawls 10A may be damaged.

However, in the illustrated embodiment, the roller retaining pawls 10A have a hardness about equal to or lower than the hardness of the roller retainer 1 itself and is annealed or treated not to be carburized to have a hardness equal to or lower than Hv 400, the roller retaining pawls 10A can easily bent and, thus reduction in strength during the bending of the roller retaining pawls 10A can advantageously be avoided. Also, since the roller retaining pawls 10A can be formed by the use of any known bending technique, formation thereof can be easily achieved as compared with those formed by staking.

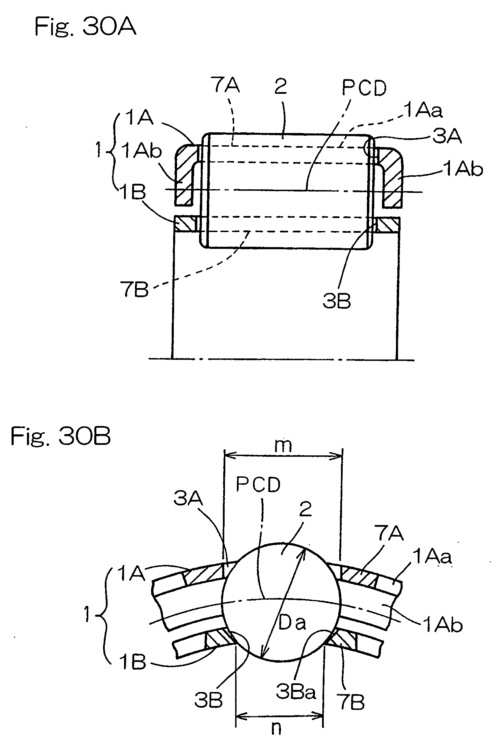

In addition, since the opposite collars 1b of the roller retainer 1 are each in the form of a flat collar, the surface area can be secured in each of the collars 1b to a certain extent and, for this reason, even when the roller retainer 1 is mounted on, for example, a crankshaft for the support of the planetary gear as will be described later, and is held in sliding contact with neighboring component parts, the roller retainer 1 will not interfere with an inner peripheral surface of the neighboring component parts such as, for example, the planetary gears. Seventh Embodiment (Figs. 30A to 31B)

Referring now to Figs. 30A to 31B showing the roller/retainer assembly according to a seventh preferred embodiment of the present invention, the roller/retainer assembly shown therein includes a roller retainer 1 and a circular row of needle rollers 2. The roller retainer 1 includes an outer member 1A and an inner member 1B which defines a means for restraining the needle rollers 2 from separating or falling from the roller retainer 1. The outer member 1A is made up of an annular body 1Aa of a diameter greater than the pitch circle diameter PCD of the circular row of the rollers 2 and a collar 1Ab bent radially inwardly from each of opposite ends of the annular body 1Aa so as to lie perpendicular to the annular body 1Aa. The inner member 1B has a diameter smaller than the pitch circle diameter PCD of the circular row of the rollers 2.

The annular body 1Aa and the inner member 1B are of a cylindrical shape and are formed with respective rows of pockets 3A and 3B that are spaced an equal distance from each other in a direction circumferentially thereof. The rollers 2 are positioned between the annular body 1Aa and the inner member 1B while being received in part within the pockets 3A and in part within the pockets 3B. As a matter of design, the neighboring pockets 3A in the outer member 1A and the similarly neighboring pockets 3B in the inner member 1B define respective pillars 7A and 7B.

In the collared outer member 1A, each of the pockets 3A defined therein has a width m, which is slightly smaller than the outer diameter Da of each roller 2 so that the respective roller 2 will not pass therethrough to fall radially outwardly from the roller retainer 1. Similarly, in the collarless inner member 1B, each of the pockets 3B defined therein has a width n, which is slightly smaller than the outer diameter Da of each roller 2 so that the respective roller 2 will not pass therethrough to fall radially inwardly from the roller retainer 1.

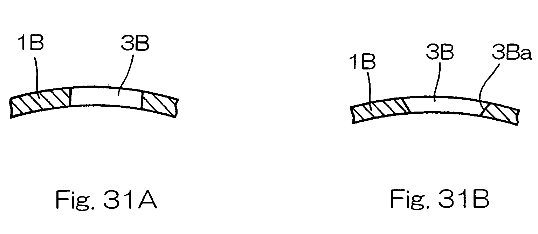

Each of the pockets 3B in the inner member 1B is of a roller guiding shape effective to guide the corresponding roller 2. In other words, each of the pockets 3B has opposite inner faces so shaped as to define respective inclined faces 3Ba effective to hold the corresponding roller 2. The inclined faces 3Ba are formed by means of a press, as shown in Fig. 31A, after the respective pocket 3B have been formed in the inner member 1B by punching by means of a press as shown in Fig. 31A.

The inner member 1B is formed into an annular shape by being made of a synthetic resin or by welding opposite ends of a strip such as a steel strip which has been curled. In the case of the synthetic resin, a polyamide resin (for example, PA66, PA46 or the like) or a polyacetal resin can be used as a material for the inner member 1B and the inner member 1B is formed by adding reinforcement fibers such as carbon fibers or glass fibers to the synthetic resin. Each of the pockets 3B is machined before being curled. The outer member 1A is formed from a metallic plate such as, for example, a steel plate by means of a press work, for example, by means of a drawing work. This outer member 1A is rendered to be a guide for the outer diameter.

With the roller retainer 1 so constructed as hereinbefore described, the fill factor P can be increased for a limited available space. In other words, since the roller retainer 1 is of two-piece construction including the outer member 1A and the inner member 1B, a function of avoiding separation of the rollers in a direction radially outwardly of the roller/retainer assembly and a function of avoiding separation of the rollers in a direction radially inwardly of the roller/retainer assembly are accomplished by the outer member 1A and the inner member 1B, respectively, with those functions of those members 1A and 1B consequently simplified. Because of this, the number of the rollers that can be used can be increased for a given space with a maximum load bearing capacity obtained consequently. Also, since each of the outer and inner members 1A and 1B can have a simplified shape, the roller guiding function can also be increased and it can be excellent in terms of the strength and the precision. In particular, where the strength of each of the pillars 7B in the inner member 1B, which is difficult to secure a sufficient width for each pillar, tends to be lowered, the inner member 1B can have a plate thickness greater than that of the outer member 1A and, therefore, a relatively large freedom of choice of the optimum design can be obtained.

It is to be noted in any one of the fifth and sixth embodiments of the present invention shown in Fig. 23 and Fig. 29, respectively, the roller retainer 1 and the rollers 2 may be simultaneously heat treated in a condition with the rollers 2 incorporated in the roller retainer 1. In such case, the heat treatment should be performed after the roller retaining pawls 10A have been bent in the manner described hereinbefore.

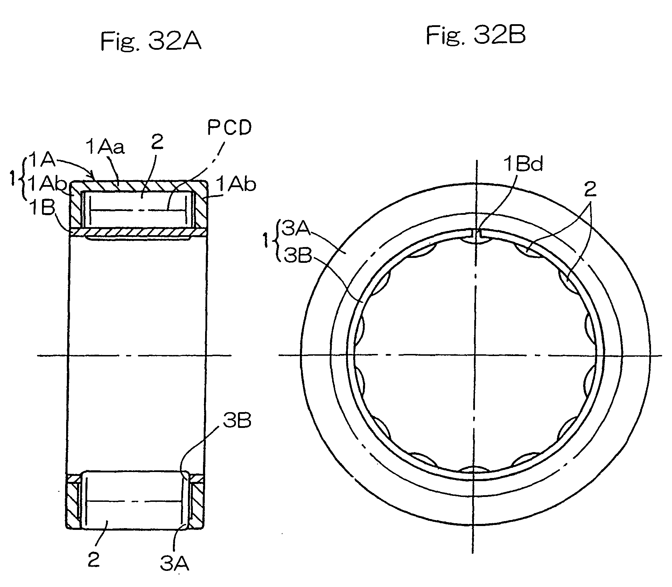

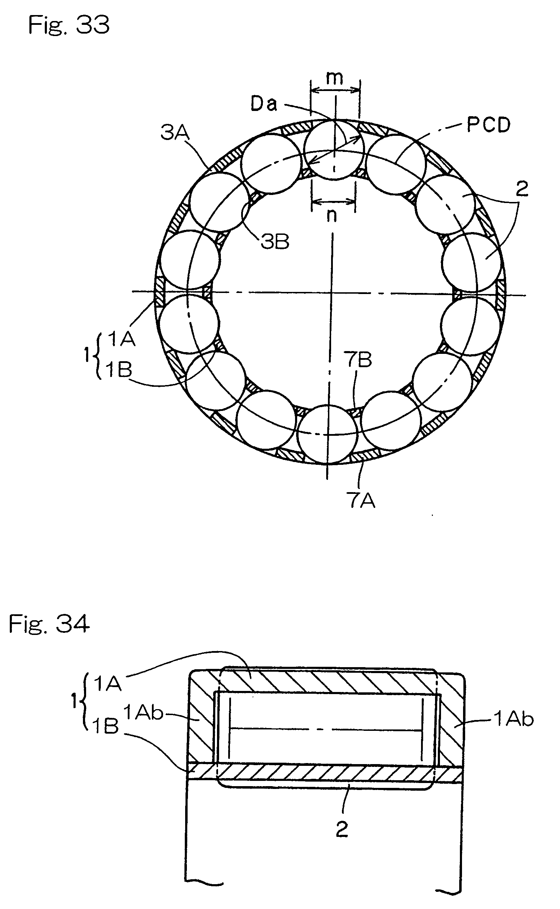

Eighth Embodiment (Figs. 32A to 34)

The roller/retainer assembly according to the eighth preferred embodiment of the present invention is shown in Figs. 32A to 34, reference to which will now be made.

The roller/retainer assembly according to this embodiment is similar to that according to the seventh embodiment shown in and described with reference to Figs. 30A to 31B, except that in this embodiment the inner member 1B has a capability of being constricted to a diameter smaller than the diameter of the circle inscribed by the circular row of the rollers 2.

In this embodiment, as best shown in Fig. 32B, the inner member 1B is of a generally split-ring shape having a slit 1Bd defined at one location of the circumference thereof and, therefore, the inner member 1B can be constricted to a diameter smaller than the diameter of the circle inscribed by the circular row of the rollers 2. In other words, the inner member 1B has a slit defined in a predetermined portion of the circumference thereof to define a split-ring shape. The position where the slit 1Bd is defined may be where one of the pockets 3B in the inner member 1B is formed, or where one of the pillars 7B is formed in the inner member 1B. This inner member 1B when in a condition elastically restored to the original shape may be held elastically in contact with the inner peripheral faces of the collars 1Ab of the outer member 1A, or may be spaced from the outer member 1A. Material for the inner member 1B may be either a synthetic resin, specific examples of which has already been described, or a metal such as steel plate.

In this roller/retainer assembly according to the eighth embodiment, at the time of assemblage, after the rollers 2 have been incorporated in the respective pockets 3A of the outer member 1A, which is the collared member, the inner member 1B in an elastically constricted state is mounted inside the outer member 1B. Since the inner member 1B is of a type having its opposite ends with the slit 1Bd defined therebetween, it can easily be elastically deformed to a diameter smaller than the diameter of the circle inscribed by the circular row of the rollers 2. For this reason, as compared with the seventh embodiment shown in and described with reference to Figs. 30A to 31B, the roller/retainer assembly has a high assemblability.

It is to be noted that the roller/retainer assembly shown and described in connection with any one of the third to eighth embodiments of the present invention can be employed in the planetary gear mechanism of the structure shown in and described with reference to any one of Figs. 8 to 10, in which case the roller/retainer assembly is interposed between the planetary gear and a support shaft for supporting the planetary gear with the rollers held in rolling contact with the inner peripheral surface of the planetary gear and, on the other hand, with the support shaft. The use of the roller/retainer assembly of the present invention as the roller/retainer assembly 69 is effective to secure a large load bearing capacity within a given space and is excellent in durability.

It is also to be noted that in any one of the planetary gear assemblies shown in and described with reference to Figs. 8 to 10, respectively, where the roller/retainer assembly of the structure according to the fourth embodiment shown in and described with reference to Figs. 17 to 22 or according to the fifth embodiment shown in and described with reference to Figs. 23 to 29 is employed, the planetary gear mechanism can be operated under a severe oiling condition and, therefore, heat emission can be reduced.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

**Claims**

1. A combined roller and retainer assembly for a planetary gear mechanism including a planetary gear and a support shaft for supporting the planetary gear, which assembly is interposed between the planetary gear and the support shaft and wherein rollers are held in rolling contact with the planetary gear and the support shaft, which assembly comprises:

   (a) a roller retainer including a pair of annular portions spaced in an axial direction from each other and confronting with each other and a plurality of pillars extending between respective outer peripheral edges of the annular portions and spaced in a direction circumferentially of the annular portions; and
   (b) a circular row of rollers accommodated within respective pockets each defined between the neighboring pillars in circumferentially spaced relation to each other and constrained by the pillars from separating in a direction radially outwardly of the roller retainer;

(c) wherein roller retaining pawls of a bent shape are provided in respective portions of inner peripheral portions of the annular portions at a location aligned with the neighboring rollers for constraining the rollers from separating in a direction radially inwardly of the roller retainer; and

(d) wherein the roller retaining pawls are annealed or treated not to be carburized to have a hardness about equal to or lower than the hardness of the roller retainer and equal to or lower than Hv 400.

2. The combined roller and retainer assembly for the planetary gear mechanism as claimed in Claim 1, wherein each of the roller retaining pawls is bent at an angle within the range of 30 to 90° relative to the annular portions.

3. The combined roller and retainer assembly for the planetary gear mechanism as claimed in Claim 1, wherein each of the roller retaining pawls has a length sufficient to allow each roller retaining pawl to engage a chamfered area of the respective roller.

4. The combined roller and retainer assembly for the planetary gear mechanism as claimed in Claim 1, wherein each of the roller retaining pawls represents an arcuately bent shape.

5. The combined roller and retainer assembly for the planetary gear mechanism as claimed in Claim 1, wherein each of the roller retaining pawls is of a shape having an outwardly tapered thickness.

6. The combined roller and retainer assembly for the planetary gear mechanism as claimed in Claim 1, wherein the roller retaining pawls are provided in only one of the annular portions.

7. The combined roller and retainer assembly for the planetary gear mechanism as claimed in Claim 1, wherein, in place of the element (d), (e) the roller retainer having the rollers incorporated therein is heat treated.

8. A planetary gear support structure, which comprises:

an internally or externally toothed sun gear;
a carrier provided for rotation in coaxial relation with the sun gear and having a support shaft provided thereon; and
a planetary gear rotatably mounted on the support shaft and meshed with the sun gear;

wherein a combined roller and retainer assembly is interposed between the planetary gear and the support shaft, the combined roller and retainer assembly being of a structure as defined in Claim 1.

9. A planetary gear support structure, which comprises:

an internally or externally toothed sun gear;
a carrier provided for rotation in coaxial relation with the sun gear and having a support shaft provided thereon; and
a planetary gear rotatably mounted on the support shaft and meshed with the sun gear;

where in a combined roller and retainer assembly is interposed between the planetary gear and the support shaft, the combined roller and retainer assembly being of a structure as defined in Claim 7.

10. A planetary gear support structure, which comprises:

an internally or externally toothed sun gear;
a carrier provided for rotation in coaxial relation with the sun gear and having a support shaft provided thereon;
a crankshaft which is a support shaft and which is rotatably supported by the carrier and having a plurality of eccentric shaft portions adjoining to each other; and
a planetary gear rotatably mounted on each of the eccentric shaft portion of the crankshaft and meshed with the sun gear;

wherein a combined roller and retainer assembly is interposed between the planetary gear and each of the eccentric shaft portions of the crankshaft, the combined roller and retainer assembly being of a structure as defined in Claim 1.

**11.** A planetary gear support structure, which comprises:

an internally or externally toothed sun gear;
a carrier provided for rotation in coaxial relation with the sun gear and having a support shaft provided thereon;
a crankshaft which is a support shaft and which is rotatably supported by the carrier and having a plurality of eccentric shaft portions adjoining to each other; and
a planetary gear rotatably mounted on each of the eccentric shaft portion of the crankshaft and meshed with the sun gear;

wherein a combined roller and retainer assembly is interposed between the planetary gear and each of the eccentric shaft portions of the crankshaft, the combined roller and retainer assembly being of a structure as defined in Claim 7.

**12.** A combined roller and retainer assembly including a roller retainer and a plurality of rollers;
wherein the roller retainer comprises:

an annular body which has a diameter greater than a pitch circle diameter of a row of the rollers;
a collar protruding radially inwardly from each of opposite ends of the annular body;
a plurality of pockets for accommodating the respective rollers therein, which is defined in the annular body and spaced a distance from each other in a circumferential direction with a pillar left between the neighboring pockets; and
an element for preventing the rollers from separating in a direction radially inwardly of the roller retainer;

wherein the fill factor P of the rollers relative to an entire circumference of the roller retainer, which is expressed by $P = (d \times n)/(D \times đ)$, where d represents the diameter of each of the rollers, n represents the number of the rollers and D represents the pitch circle diameter of the row of the rollers, is equal to or greater than 80%.

**13.** The combined roller and retainer assembly as claimed in Claim 12, wherein each of the rollers has an engagement stud protruding coaxially from a center of each of opposite ends of the respective roller and the element for preventing the rollers from separating is an annular groove defined in an annular inner face of each of the collars for engagement with the corresponding engagement stud.

**14.** The combined roller and retainer assembly as claimed in claim 12, wherein the element for preventing the rollers from separating is a projection protruding outwardly from a portion of an annular inner face of each of the collars between the neighboring rollers.

**15.** The combined roller and retainer assembly as claimed in Claim 12, wherein the element for preventing the rollers from separating is a roller retaining pawl of a bent shape provided in a portion of an annular inner face of each of the collars between the neighboring rollers.

**16.** The combined roller and retainer assembly as claimed in Claim 12, wherein the roller retainer comprises an outer member, and an inner member serving as the element for preventing the rollers from separating and formed in an annular shape of a diameter smaller than the pitch circle diameter, the inner member having a plurality of pockets defined therein and spaced a distance from each other in a circumferential direction while allowing the rollers to partially protrude in a radially inner direction;
wherein the outer member includes an annular body of a diameter greater than the pitch circle diameter and a collar protruding radially inwardly from each of opposite ends of the annular body.

**17.** The combined roller and retainer assembly as claimed in Claim 16, wherein the inner member has a capability of being constricted to a diameter smaller than a roller set bore diameter for the row of the rollers.

**18.** The combined roller and retainer assembly as claimed in Claim 12, which is interposed between a planetary gear of a planetary gear mechanism and a support shaft for supporting the planetary gear and wherein the rollers are held in rolling contact with an inner peripheral surface of the planetary gear and the support shaft.

Fig. 1

Fig. 2

Fig. 3

Fig. 4

Fig. 5

Fig. 6

Fig. 7

Fig. 8

EP 1 519 062 A2

Fig. 9

Fig. 10

Fig. 11

Fig. 12

Fig. 13

Fig. 14A

Fig. 14B

Fig. 15

Fig. 16A

Fig. 16B

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30A

Fig. 30B

Fig. 31A

Fig. 31B

Fig. 32A

Fig. 32B

Fig. 33

Fig. 34

Fig. 35A

PRIOR ART

Fig. 35B

PRIOR ART

Fig. 36

PRIOR ART

Fig. 37

PRIOR ART

Fig. 38

PRIOR ART

Fig. 39

PRIOR ART

Fig. 40

PRIOR ART

Fig. 41A

PRIOR ART

Fig. 41B

PRIOR ART